# EUROPEAN PATENT APPLICATION

(11) **EP 4 344 140 A1**
(43) Date of publication of application: **27.03.2024**
(21) Application number: 22878852.7
(22) Date of filing: 04.10.2022
(51) Int. Cl.: H04L 12/46, H04L 27/36, H04W 88/08, H04W 92/20

(54) **DEVICE AND METHOD FOR FRONTHAUL TRANSMISSION IN WIRELESS COMMUNICATION SYSTEM**

(30) Priority: 05.10.2021 KR 20210131994
(71) Applicant: Samsung Electronics Co., Ltd., Suwon-si, Gyeonggi-do 16677 (KR)
(72) Inventor: KANG, Hyoseung, Suwon-si Gyeonggi-do 16677 (KR); JEON, Namryul, Suwon-si Gyeonggi-do 16677 (KR); LEE, Keonwook, Suwon-si Gyeonggi-do 16677 (KR); KO, Jaeyun, Suwon-si Gyeonggi-do 16677 (KR)
(74) Representative: Gulde & Partner
(86) International application number: PCT/KR2022/014910
(87) International publication number: WO 2023/059031

(57) **Abstract**

The present disclosure relates to a 5^{th} generation (5G) or pre-5G communication system for supporting a higher data transmission rate than a 4^{th} generation (4G) communication system such as long term evolution (LTE). According to various embodiments of the present disclosure, an apparatus of a distributed unit (DU) in a wireless communication system includes at least one transceiver, and at least one processor coupled with the at least one transceiver, and the at least one processor is configured to: generate a frame of global system for mobile communications (GSM); acquire a GSM packet corresponding to a timeslot of the frame, based on packetizing of the frame of the GSM; and transmit a message including the GSM packet to a radio unit (RU) through an enhanced common public radio interface (eCPRI)-based fronthaul interface, and the message includes at least one of data corresponding to the GSM packet, information regarding a number of the frame, or information regarding a number of the timeslot.

## Description

### [Technical Field]

The disclosure relates to a wireless communication system, and for example, to an apparatus and a method for fronthaul transmission in a wireless communication system.

### [Background Art]

Efforts to develop enhanced 5^{th} generation (5G) communication systems or pre-5G communication systems have been ongoing in order to meet the increasing demand for wireless data traffic since 4^{th} generation (4G) communication systems were commercialized. For this reason, the 5G communication systems or pre-5G communication systems are called Beyond 4G network communication systems or post long term evolution (LTE) systems.

The 5G communication system is considered to be implemented in a superhigh frequency band to achieve a high data transmission rate. For the 5G communication systems, technologies for beamforming, massive multiple input multiple output (MIMO), full dimensional MIMO (FD-MIMO), array antenna, analog beam-forming, and large scale antenna are being discussed to mitigate a path loss of a radio wave and to increase a transmission distance of a radio wave in the superhigh frequency band.

In addition, technologies for evolved small cells, advanced small cells, cloud radio access network (RAN), ultra-dense network, device to device communication (D2D), wireless backhaul, moving network, cooperative communication, coordinated multi-points (CoMP), and interference cancellation in the 5G communication systems are developing to enhance networks of systems.

In addition, hybrid frequency shift keying and quadrature amplitude modulation (FQAM) and sliding window superposition coding (SWSC), which are advanced coding modulation (ACM) schemes, and filter bank multi carrier (FBMC), non-orthogonal multiple access (NOMA), and sparse code multiple access (SCMA) which are enhanced accessing technology in the 5G systems are developing.

As a transmission capacity in a wireless communication system increases, a function split may be applied to split a base station by function. According to the function split, the base station may be split into a digital unit (DU) and a radio unit (RU), fronthaul for communication between the DU and the RU is defined, and transmission through the fronthaul is required. There is a need for a solution for enhancing stability associated with a control plane or a user plane when a failure occurs at a fronthaul port between the DU and the RU.

### [Disclosure of Invention]

### [Technical Problem]

Embodiments of the disclosure provide an apparatus and a method for an enhanced common public radio interface (eCPRI)-based global system for mobile communications (GSM) fronthaul interface.

Embodiments of the disclosure provide an apparatus and a method for delivering a GSM packet in an eCPRI-based fronthaul interface of an open-radio access network (O-RAN).

Embodiments of the disclosure provide an apparatus and a method for mapping an extended antenna-carrier (eAxC) onto a transceiving port of GSM in a wireless communication system.

### [Solution to Problem]

According to various example embodiments of the disclosure, there is provided a method performed by a distributed unit (DU) in a wireless communication system, the method including: generating a frame of global system for mobile communications (GSM); acquiring a GSM packet corresponding to a timeslot of the frame based on packetizing of the frame of the GSM; and transmitting a message including the GSM packet to a radio unit (RU) through an enhanced common public radio interface (eCPRI)-based fronthaul interface, wherein the message includes data corresponding to the GSM packet, information regarding a number of the frame, and/or information regarding a number of the timeslot.

According to various example embodiments of the disclosure, there is provided a method performed by a radio unit (RU) in a wireless communication system, the method including: receiving, from a distributed unit (DU) through an enhanced common public radio interface (eCPRI)-based fronthaul interface, a message including a GSM packet corresponding to a timeslot in a frame of global system for mobile communications (GSM); and transmitting the GSM packet to a terminal for the timeslot based on the message, wherein the message includes data corresponding to the GSM packet, information regarding a number of the frame, and/or information regarding a number of the timeslot.

According to various example embodiments of the disclosure, there is provided an apparatus of a distributed unit (DU) in a wireless communication system, the apparatus including: at least one transceiver; and at least one processor coupled with the at least one transceiver, wherein the at least one processor is configured to: generate a frame of global system for mobile communications (GSM); acquire a GSM packet corresponding to a timeslot of the frame based on packetizing of the frame of the GSM; and transmit a message including the GSM packet to a radio unit (RU) through an enhanced common public radio interface (eCPRI)-based fronthaul interface, wherein the message includes at least one of data corresponding to the GSM packet, information regarding a number of the frame, or information regarding a number of the timeslot.

According to various example embodiments of the disclosure, there is provided an apparatus of a radio unit (RU) in a wireless communication system, the apparatus including: at least one transceiver; and at least one processor coupled with the at least one transceiver, wherein the at least one processor is configured to: receive, from a distributed unit (DU) through an enhanced common public radio interface (eCPRI)-based fronthaul interface, a message including a GSM packet corresponding to a timeslot in a frame of global system for mobile communications (GSM); and transmit the GSM packet to a terminal for the timeslot based on the message, wherein the message includes at least one of data corresponding to the GSM packet, information regarding a number of the frame, or information regarding a number of the timeslot.

According to various example embodiments of the disclosure, there is provided a method performed by a radio unit (RU) in a wireless communication system, the method including: receiving a frame of global system for mobile communications (GSM) from a terminal; acquiring a GSM packet corresponding to a timeslot of the frame based on packetizing of the frame of the GSM; and transmitting a message including the GSM packet to a distributed unit (DU) through an enhanced common public radio interface (eCPRI)-based fronthaul interface, wherein the message includes at least one of data corresponding to the GSM packet, information regarding a number of the frame, or information regarding a number of the timeslot.

According to various example embodiments of the disclosure, there is provided a method performed by a distributed unit (DU) in a wireless communication system, the method including: receiving, from a radio unit (RU) through an enhanced common public radio interface (eCPRI)-based fronthaul interface, a message including a GSM packet corresponding to a timeslot in a frame of global system for mobile communications (GSM); and transmitting the GSM packet to an upper node for the timeslot based on the message, wherein the message includes at least one of data corresponding to the GSM packet, information regarding a number of the frame, or information regarding a number of the timeslot.

According to various example embodiments of the disclosure, there is provided an apparatus of a radio unit (RU) in a wireless communication system, the apparatus including: at least one transceiver and at least one processor coupled with the at least one transceiver, wherein the at least one processor is configured to: receive a frame of global system for mobile communications (GSM) from a terminal; acquire a GSM packet corresponding to a timeslot of the frame based on packetizing of the frame of the GSM; and transmit a message including the GSM packet to a distributed unit (DU) through an enhanced common public radio interface (eCPRI)-based fronthaul interface, wherein the message includes at least one of data corresponding to the GSM packet, information regarding a number of the frame, or information regarding a number of the timeslot.

According to various example embodiments of the disclosure, there is provided an apparatus of a distributed unit (DU) in a wireless communication system, the apparatus including: at least one transceiver and at least one processor coupled with the at least one transceiver, wherein the at least one processor is configured to: receive, from a radio unit (RU) through an enhanced common public radio interface (eCPRI)-based fronthaul interface, a message including a GSM packet corresponding to a timeslot in a frame of global system for mobile communications (GSM); and transmit the GSM packet to an upper node for the timeslot based on the message, wherein the message includes at least one of data corresponding to the GSM packet, or information regarding a number of the frame, information regarding a number of the timeslot.

### [Advantageous Effects of Invention]

The apparatus and the method according to various example embodiments of the disclosure provide an efficient deployment supporting a multi-radio access technology (RAT) through an enhanced common public radio interface (eCPRI)-based fronthaul interface for global system for mobile communications (GSM).

The apparatus and the method according to various example embodiments of the disclosure enable efficient transmission with a small capacity through mapping between a GSM packet and an extended antenna-carrier (eAxC), compared to a CPRI-based interface.

The apparatus and the method according to various example embodiments of the disclosure may efficiently transmit a message through a message format for transmitting a control plane message and a user plane message for GSM at a time.

The effect achieved in the disclosure is not limited to those mentioned above, and other effects that are not mentioned above may be clearly understood to those skilled in the art based on the description provided below.

### [Brief Description of Drawings]

The above and other aspects, features, and advantages of certain embodiments of the disclosure will be more apparent from the following description taken in conjunction with the accompanying drawings, in which:
FIG. 1A is a diagram illustrating an example wireless communication system according to various embodiments;
FIG. 1B is a block diagram illustrating an example of a fronthaul structure according to a function split of a base station according to various embodiments;
FIG. 2 is a block diagram illustrating an example configuration of a digital unit (DU) according to various embodiments;
FIG. 3 is a block diagram illustrating an example configuration of a radio unit (RU) according to various embodiments;
FIG. 4 is a diagram illustrating an example of a function split according to various embodiments;
FIG. 5A is a diagram illustrating an example of a common public radio interface (CPRI)-based fronthaul interface for global system for mobile communications (GSM) according to various embodiments;
FIG. 5B is a diagram illustrating an example of an enhanced CPRI (eCPRI)-based fronthaul interface for new radio (NR) or long term evolution (LTE) according to various embodiments;
FIG. 6 is a diagram illustrating an example functional configuration of a virtualized distributed unit (vDU) according to various embodiments;
FIG. 7 is a diagram illustrating an example of an eCPRI-based fronthaul interface for GSM according to various embodiments;
FIG. 8 is a diagram illustrating an example of an RU for multi-radio access technology (RAT) according to various embodiments;
FIG. 9 is a diagram illustrating an example of a function split in an eCPRI-based fronthaul interface for GSM according to various embodiments;
FIG. 10 is a signal flow diagram illustrating example signaling between a DU and an RU in an eCPRI-based fronthaul interface for GSM according to various embodiments;
FIG. 11 is a diagram illustrating an example protocol stack between a DU and an RU in an eCPRI-based fronthaul interface for GSM according to various embodiments;
FIG. 12A is a diagram illustrating an example downlink message for a GSM packet in an eCPRI-based fronthaul interface for GSM according to various embodiments;
FIG. 12B is a diagram illustrating an example uplink message for a GSM packet in an eCPRI-based fronthaul interface for GSM according to various embodiments; and
FIG. 13 is a diagram illustrating mapping between a GSM packet and an extended antenna-carrier (eAxC) according to various embodiments.

Regarding the drawings, the same or similar reference numerals may be used for the same or similar components.

### [Mode for Carrying out the Invention]

The terms used in the disclosure are used to describe specific embodiments and are not intended to limit the scope of various embodiments. The terms of a singular form may include plural forms unless otherwise specified. All of the terms used herein, which include technical or scientific terms, may have the same meaning that is generally understood by a person skilled in the art. It will be further understood that terms, which are defined in a dictionary, may be interpreted as having the same or similar meanings as or to contextual meanings of the relevant related art and not in an idealized or overly formal way, unless expressly so defined herein in the disclosure. In some cases, even if the terms are terms which are defined in the disclosure, they should not be interpreted as excluding embodiments of the disclosure.

In various embodiments of the disclosure described below, hardware-wise approach methods will be described by way of an example. However, various embodiments of the disclosure include technologies using both hardware and software, and thus do not exclude software-based approach methods.

As used herein, terms indicating signals (for example, a message, information, a preamble, a signal, a signaling, a sequence, a stream), terms indicating paths (for example, a port, a stream, a layer, an RU port, a DU port, a fronthaul (FH) port, an input unit, an output unit, an input terminal, an output terminal, a termination end), terms indicating resources (for example, a symbol, a slot, a subframe, a radio frame, a subcarrier, a resource element (RE), a resource block (RB), a bandwidth part (BWP), an occasion), terms indicating an operation state (for example, a step, an operation, a procedure), terms indicating data (for example, a packet, a user stream, information, a bit, a symbol, a codeword), terms indicating channels, terms indicating control information (for example, downlink control information (DCI), a medium access control (MAC) control element (CE), radio resource control (RRC) signaling), terms indicating network entities, terms indicating components of a device are merely examples for convenience of explanation. Accordingly, the disclosure is not limited to the terms described below, and other terms having the same or similar technical meanings may be used.

In addition, in the disclosure, the expression "exceeding" or "being less than" may be used to determine whether a specific condition is satisfied, fulfilled, but these are just for expressing an example and do not exclude the expression "being greater than or equal to" or "being less than or equal to." The condition described by "being greater than or equal to" may be substituted with "exceeding", the condition described by "being less than or equal to" may be substituted with "being less than", and the condition described by "being greater than or equal to and less than" may be substituted with "exceeding and being less than or equal to".

In addition, the disclosure describes various embodiments using terms used in various communication standards (for example, 3^{rd} generation partnership project (3 GPP), extensible radio access network (xRAN), open-radio access network (O-RAN)), but these are merely examples. Various embodiments of the disclosure may be easily modified and applied to other communication systems.

In the disclosure, the term 'slot' may have a different meaning according to a supported communication system. In an NR communication system, the 'slot' indicates 14 symbols (or a symbol group). Unlike in the NR communication system, the 'slot' in 3GPP standards of LTE indicates 7 symbols. The 'slot' in GSM is a timeslot and 8 timeslots correspond to one timed division multiplexing access (TDMA) frame. In other words, the slot may have a different meaning based on a communication system. For example, the 'slot' in an LTE communication system may have a correlation with an LTE transmission time interval (TTI) defined in 3GPP.

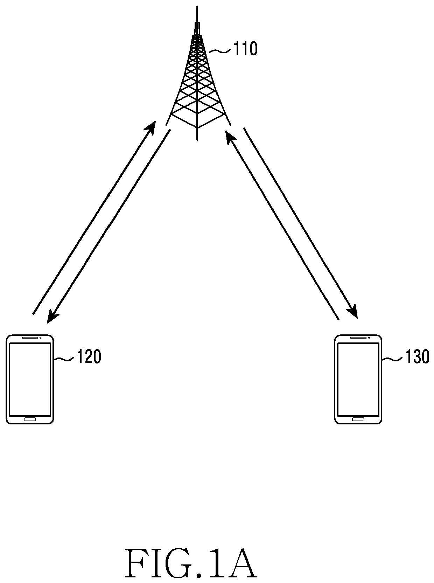

FIG. 1A is a diagram illustrating an example wireless communication system according to various embodiments. FIG. 1A illustrates a base station 110, a terminal 120, and a terminal 130 as parts of nodes using a wireless channel in a wireless communication system. FIG. 1A illustrates only one base station, but may further include other base stations which are the same as or similar to the base station 110.

The base station 110 is a network infrastructure that provides radio access to the terminals 120, 130. The base station 110 has a coverage that is defined as a predetermined (e.g., specified) geographical region based on a distance by which a signal is transmitted. The base station 110 may be referred to as `access point (AP),' `eNodeB (eNB),' '5^{th} generation node (5G node),' `next generation nodeB (gNB),' `wireless point,' 'transmission/reception point (TRP),' or other terms having the same or similar technical meaning as the above-mentioned terms, in addition to the base station.

Each of the terminal 120 and the terminal 130 may be a device that is used by a user and performs communication with the base station 110 through a wireless channel. A link from the base station 110 toward the terminal 120 or the terminal 130 may be referred to as a downlink (DL), and a link from the terminal 120 or the terminal 130 toward the base station 110 may be referred to as an uplink (UL). In addition, the terminal 120 and the terminal 130 may perform communication with each other through a wireless channel. In this case, a device-to-device link (D2D) between the terminal 120 and the terminal 130 may be referred to as a sidelink, and the sidelink may be interchangeably used with a PCS interface. According to circumstances, at least one of the terminal 120 and the terminal 130 may be operated without user's intervention. For example, at least one of the terminal 120 and the terminal 130 may be a device that performs machine type communication (MTC), and may not be carried by a user. Each of the terminal 120 and the terminal 130 may be referred to as `user equipment (UE),' `customer-premises equipment (CPE),' `mobile station,' `subscriber station,' `remote terminal,' `wireless terminal,' `electronic device,' or 'user device,' or other terms having the same or similar technical meaning as the above-mentioned terms, in addition to the terminal.

The base station 110, the terminal 120, the terminal 130 may perform beamforming. The base station and the terminal may transmit and receive wireless signals in a relatively low frequency band (for example, frequency range 1 (FR1) of NR). In addition, the base station and the terminal may transmit and receive wireless signals in a relatively high frequency band (for example, FR2 of NR, millimeter wave (mmWave) bands (for example, 28 GHz, 30 GHz, 38 GHz, 60 GHz)). In various embodiments, the base station 110 may perform communication with the terminal 120 within a frequency range corresponding to FR1. In various embodiments, the base station may perform communication with the terminal 130 within a frequency range corresponding to FR2. In this case, the base station 110, the terminal 120, the terminal 130 may perform beaming to enhance a channel gain. Herein, beamforming may include transmission beamforming and reception beamforming. For example, the base station 110, the terminal 120, the terminal 130 may give directivity to a transmission signal or a reception signal. To achieve this, the base station 100 and the terminals 120, 130 may select serving beams through a beam search or beam management procedure. After serving beams are selected, communication thereafter may be performed through resources that have a quasi co-located (QCL) relationship with resources through which the serving beams are transmitted.

If large-scale characteristics of a channel through which a symbol on a first antenna port is transmitted can be inferred from a channel through which a symbol on a second antenna port is transmitted, the first antenna port and the second antenna port may be evaluated as having a QCL relationship. For example, the large-scale characteristics may include at least one of delay spread, doppler spread, doppler shift, average gain, average delay, spatial receiver parameter.

In FIG 1A, it is assumed that both the base station and the terminal perform beamforming, but various embodiments of the disclosure are not limited thereto. In various embodiments, the terminal may perform beaming or may not perform beamforming. In addition, the base station may perform beamforming or may not perform beamforming. That is, any one of the base station and the terminal may perform beamforming or none of the base station and the terminal may perform beamforming.

Although FIG. 1A illustrates the base station 110, the terminal 120, the terminal 130, embodiments of the disclosure may be applied to an integrated access and backhaul (IAB) node as a newly introduced relay node. An explanation of the base station described in the disclosure may be applied to a DU of the IAB node, and an explanation of the terminal described in the disclosure may be applied to a mobile terminal (MT) of the IAB node in the same or similar way.

In the disclosure, a beam may refer to a spatial flow of a signal in a wireless channel, and may be formed by one or more antennas (or antenna elements) and a process of forming a beam may be referred to as beamforming. Beamforming may include analogue beamforming and digital beamforming (for example, precoding). A reference signal transmitted based on beamforming may include, for example, a demodulation-reference signal (DM-RS), a channel state information-reference signal (CSI-RS), a synchronization signal/physical broadcast channel (SS/PBCH), a sounding reference signal (SRS). In addition, an IE like a CSI-RS resource or an SRS-resource may be used as a configuration for each reference signal. This configuration may include information associated with a beam. The information associated with the beam may indicate whether a corresponding configuration (for example, a CSI-RS resource) uses the same spatial domain filter as another configuration (for example, another CSI-RS resource within the same CSI-RS resource set) or uses a different spatial domain filter, or may indicate with which reference signal a corresponding configuration has a quasi-co-located (QCL) relationship and what type (for example, QCL type A, B, C, D) the corresponding configuration is if it has the QCL relationship.

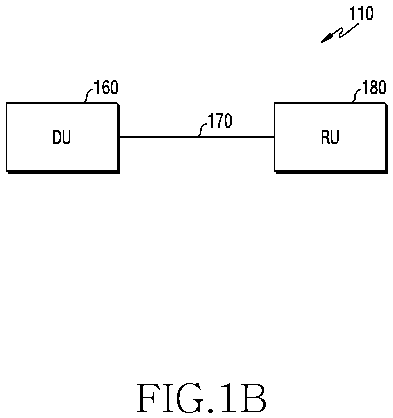

In a related-art communication system in which a cell radius of a base station is relatively large, each base station may be installed to include functions of a digital processing unit (or a digital unit (DU)) and a radio frequency (RF) processing unit (or a radio unit (RU)). However, in a 4^{th} generation (4G) communication and/or a beyond 4G network communication system, a high frequency band may be used and a cell radius of a base station may be reduced, and accordingly, the number of base stations for covering a specific region may increase and a burden on an installation cost of an operator for installing the increased number of base stations may increase. In order to minimize and/or reduce the installation cost of the base stations, there is provided a structure in which a DU and an RU of a base station are split and one or more RUs are connected to one DU through a wired network, and one or more topographically distributed RUs are arranged to cover a specific region. Hereinafter, a deployment structure of a base station and extension examples according to various embodiments of the disclosure will be described through FIG. 1B.

FIG. 1B is a block diagram illustrating an example of a fronthaul structure according to a function split of a base station according to various embodiments. The fronthaul refers to a link formed between entities between a wireless LAN and a base station, which is different from backhaul between core networks of a base station. FIG. 1B illustrates an example of a fronthaul structure a DU 160 and one RU 180, but this is merely an example and the disclosure is not limited thereto. In other words, an embodiment of the disclosure may be applied to a fronthaul structure between one DU and a plurality of RUs. For example, an embodiment of the disclosure may be applied to a fronthaul structure between one DU and two RUs. In addition, an embodiment of the disclosure may be applied to a fronthaul structure between one DU and three RUs.

Referring to FIG. 1B, the base station 110 may include the DU 160 and the RU 180. A fronthaul 170 between the DU 160 and the RU 180 may be operated through an Fx interface. In order to operate the fronthaul 170 between the DU 160 and the RU 180, an interface, for example, an enhanced common public radio interface (eCPRI), a radio over ethernet (ROE), may be used.

With the development of communication technology, mobile data traffic increases, and accordingly, bandwidth requirements required by a fronthaul between a digital unit and a radio unit increase. In a deployment like a centralized/cloud radio access network (C-RAN), the DU may perform functions related to a packet data convergence protocol (PDCP), radio link control (RLC), media access control (MAC), physical (PHY), and the RU may be implemented to further perform functions related to a PHY layer in addition to a radio frequency (RF) function.

The DU 160 may take charge of an upper layer function of a radio network. For example, the DU 160 may perform a function of an MAC layer, a part of the PHY layer. Herein, the part of functions of the PHY layer may be functions that are performed at a higher step among the functions of the PHY layer, and for example, may include channel encoding (or channel decoding), scrambling (or descrambling), modulation (or demodulation), layer mapping (or layer demapping). According to an embodiment, when the DU 160 follows O-RAN standards, the DU may be referred to as an O-DU (O-RAN DU). The DU 160 may be substituted with a first network entity for the base station (for example, gNB) according to necessity in embodiments of the disclosure.

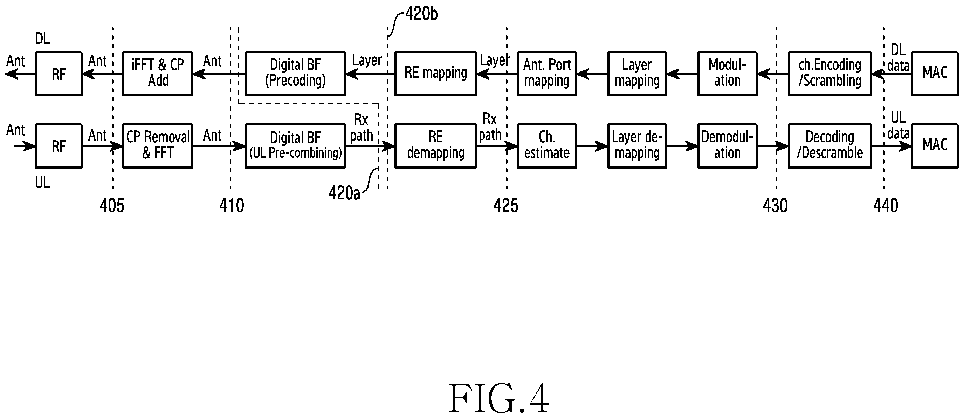

The RU 180 may take charge of a lower layer function of the radio network. For example, the RU 180 may perform a part of functions of the PHY layer, an RF function. Herein, the part of functions of the PHY layer are functions that are performed on a relatively low step than the DU 160 among the functions of the PHY layer, and for example, may include IFFT conversion (or FFT conversion), CP insertion (CP removal), digital beamforming. An example of such a specific function split will be described in detail in FIG. 4. The RU 180 may be referred to as 'access unit (AU),' 'access point (AP),' 'transmission/reception point (TRP),' 'remote radio head (RRH),' `radio unit (RU),' or other terms having the same or similar technical meaning as the above-described terms. According to an embodiment, when the RU 180 follows O-RAN standards, the RU 180 may be referred to as an O-RU (O-RAN RU). The DU 180 may be substituted with a second network entity for the base station (for example, gNB) according to necessity in embodiments of the disclosure.

FIG. 1B illustrates that the base station includes the DU and the RU, but various embodiments of the disclosure are not limited thereto. In various embodiments, the base station may be implemented by a distributed deployment according to a centralized unit (CU), which is configured to perform a function of an upper layer (for example, a packet data convergence protocol (PDCP), RRC) of an access network, and a distributed unit (DU), which is configured to perform a function of a lower layer. In this case, the distributed unit (DU) may include the digital unit (DU) and the radio unit (RU) of FIG. 1. The base station may be implemented by a structure in which the CU, DU, RU are disposed in the order named between a core (for example, a 5G core (5GC) or a next generation core (NGC)) and a radio access network (RAN). An interface between the CU and the distributed unit (DU) may be referred to as an F1 interface.

The centralized unit (CU) may be connected with one or more DUs to take charge of a function of an upper layer higher than the DU. For example, the CU may take charge of functions of radio resource control (RRC) and packet data convergence protocol (PDCP) layers, and the DU and the RU may take charge of functions of lower layers. The DU may take charge of a part of functions (high PHY) of radio link control (RLC), media access control (MAC), physical (PHY) layers, and the RU may take charge of the other part of functions (low PHY) of the PHY layer. In addition, for example, the digital unit (DU) may be included in the distributed unit (DU) according to implementation of a distributed deployment of the base station. Operations of the digital unit (DU) and the RU will be described hereinbelow unless otherwise defined, but various embodiments of the disclosure may be applied to both a deployment of a base station including a CU or a deployment in which a DU is directly connected with a core network (that is, a CU and a DU are integrated into a base station (for example, an NG-RAN node) which is one entity).

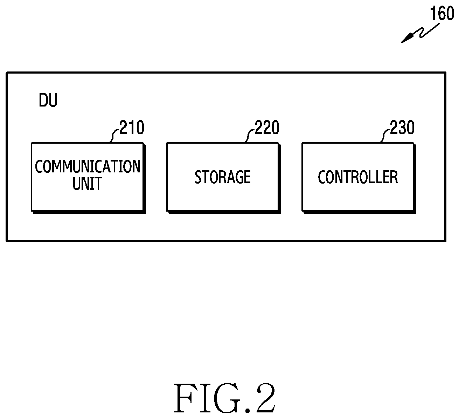

FIG. 2 is a block diagram illustrating an example configuration of a digital unit (DU) in a wireless communication system according to various embodiments. The configuration illustrated in FIG. 2 may be understood as a configuration of the DU 160 of FIG. 1B as a part of a base station. The term "unit" or terms ending with suffixes "-er," and "-or", used in the following descriptions, refer to a unit processing at least one function or operation, and may be implemented by hardware, software, or a combination of hardware and software.

Referring to FIG. 2, the DU 160 may include a communication unit (e.g., including communication circuitry) 210, a storage 220, and a controller (e.g., including various processing and/or control circuitry) 230.

The communication unit 210 may include various communication circuitry and perform functions for transmitting and receiving signals in a wired communication environment. The communication unit 210 may include a wired interface for controlling a direction connection between devices through a transmission medium (for example, a copper line, an optical fiber). For example, the communication unit 210 may deliver an electrical signal to another device through a copper line, or may perform conversion between an electrical signal and an optical signal. The communication unit 210 may be connected with a radio unit (RU). The communication unit 210 may be connected to a core network or may be connected to a CU of a distributed deployment.

The communication unit 210 may perform functions for transmitting and receiving signals in a wireless communication environment. For example, the communication unit 210 may perform a function of converting between a baseband signal and a bit stream according to a physical layer standard of a system. For example, when transmitting data, the communication unit 210 may generate complex symbols by encoding and modulating a transmission bit stream. In addition, when receiving data, the communication unit 210 may restore a reception bit stream by demodulating and decoding a baseband signal. In addition, the communication unit 210 may include a plurality of transmission and reception paths. In addition, according to an embodiment, the communication unit 210 may be connected to a core network or may be connected with other nodes (for example, an integrated access backhaul (IAB)).

The communication unit 210 may transmit and receive signals. To achieve this, the communication unit 210 may include at least one transceiver. For example, the communication unit 210 may transmit a synchronization signal, a reference signal, system information, a message, a control message, a stream, control information, or data. In addition, the communication unit 210 may perform beamforming.

The communication unit 210 may transmit and receive signals as described above. Accordingly, an entirety or a part of the communication unit 210 may be referred to as "transmitter," "receiver," or "transceiver." In addition, in the following descriptions, transmitting and receiving via a wireless channel may be used as a meaning including processing by the communication unit 210 as described above.

The communication unit 210 may further include a backhaul communication unit to connect to a core network or another base station although it is not illustrated in FIG. 2. The backhaul communication unit provides an interface for communicating with other nodes within a network. That is, the backhaul communication unit may convert a bit stream to be transmitted from the base station to another node, for example, another access node, another base station, an upper node, a core network into a physical signal, and may convert a physical signal received from another node into a bit stream.

The storage 220 may store data such as a basic program for operations of the DU 160, an application program, configuration information, or the like. The storage 220 may include a memory. The storage 220 may be configured by a volatile memory, a nonvolatile memory, or a combination of a volatile memory and a nonvolatile memory. In addition, the storage 220 provides stored data according to a request of the controller 230.

The controller 230 may include various processing and/or control circuitry and controls overall operations of the DU 160. For example, the controller 230 may transmit and receive signals via the communication unit 210 (or via the backhaul communication unit). In addition, the controller 230 may write and read out data on and from the storage 230. In addition, the controller 230 may perform functions of a protocol stack required by communication standards. To achieve this, the controller 230 may include at least one processor.

The configuration of the DU 160 illustrated in FIG. 2 is merely an example, and an example of the DU performing according to various embodiments of the disclosure is not limited by the configuration illustrated in FIG. 2. According to various embodiments, some components may be added, deleted, or changed.

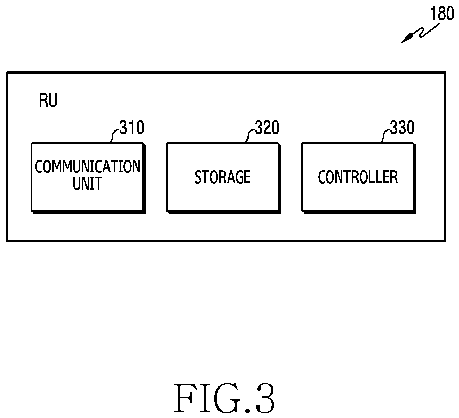

FIG. 3 is a block diagram illustrating an example configuration of a radio unit (RU) in a wireless communication system according to various embodiments. The configuration illustrated in FIG. 3 may be understood as a configuration of the RU 180 of FIG. 1B as a part of a base station. The term "unit" or terms ending with suffixes "-er," and "-or" used in the following descriptions refer to a unit processing at least one function or operation, and may be implemented by hardware, software, or a combination of hardware and software.

Referring to FIG. 3, the RU 180 may include a communication unit (e.g., including communication circuitry) 310, a storage 320, and a controller (e.g., including various processing and/or control circuitry) 330.

The communication unit 310 may include various communication circuitry and performs functions for transmitting and receiving signals via a wireless channel. For example, the communication unit 310 may up-convert a baseband signal into an RF band signal, and then may transmit the signal via an antenna, and may down-convert an RF band signal received via an antenna into a baseband signal. For example, the communication unit 310 may include a transmission filter, a reception filter, an amplifier, a mixer, an oscillator, a digital-to-analogue converter (DAC), an analog-to-digital converter (ADC), or the like.

In addition, the communication unit 310 may include a plurality of transmission and reception paths. Furthermore, the communication unit 310 may include an antenna unit. The communication unit 310 may include at least one antenna array including a plurality of antenna elements. In the hardware aspect, the communication unit 310 may be configured by a digital circuit and an analog circuit (for example, a radio frequency integrated circuit (RFIC)). Herein, the digital circuit and the analogue circuit may be implemented by a single package. In addition, the communication unit 310 may include a plurality of RF chains. The communication unit 310 may perform beamforming. The communication unit 310 may apply a beamforming weight to a signal in order to give directionality according to configuration of the controller 330 to a signal to transmit or receive. According to an embodiment, the communication unit 310 may include a radio frequency (RF) block (or an RF unit).

In addition, the communication unit 310 may transmit and receive signals. To achieve this, the communication unit 310 may include at least one transceiver. The communication unit 310 may transmit a downlink signal. The downlink signal may include a synchronization signal (SS), a reference signal (RS) (for example, a cell-specific reference signal (CRS), a demodulation (DM)-RS), system information (for example, MIB, SIB, remaining system information (RMSI), other system information (OSI)), a configuration message, control information or downlink data. In addition, the communication unit 310 may receive an uplink signal. The uplink signal may include a random access-related signal (for example, a random access preamble (RAP) (or a message 1 (Msg1)), message 3 (Msg 3)), a reference signal (for example, a sounding reference signal (SRS), a DM-RS), or a power headroom report (PHR), etc.

The communication unit 310 may transmit and receive signals as described above. Accordingly, an entirety or part of the communication unit 310 may be referred to as "transmitter," "receiver," or "transceiver." In addition, in the following descriptions, transmitting and receiving via a wireless channel may be used as a meaning including processing by the communication unit 310 as described above.

The storage 320 may store data such as a basic program for operations of the RU 180, an application program, configuration information, or the like. The storage 320 may be configured by a volatile memory, a nonvolatile memory, or a combination of a volatile memory and a nonvolatile memory. In addition, the storage 320 may provide stored data according to a request of the controller 330. According to an embodiment, the storage 320 may include a memory for a condition, a command, or a configuration value related to an SRS transmission method.

The controller 330 may include various processing and/or control circuitry and controls overall operations of the RU 180. For example, the controller 330 may transmit and receive signals via the communication unit 310. In addition, the controller 330 may write and read out data on and from the storage 320. In addition, the controller 330 may perform functions of a protocol stack required by communication standards. To achieve this, the controller 330 may include at least one processor. In various embodiments, the controller 330 may be configured to transmit an SRS to the DU 160, based on an antenna number. In addition, in various embodiments, the controller 330 may be configured to transmit the SRS to the DU 160 after uplink transmission. The condition command or configuration value according to the SRS transmission method may be an instruction set or a code stored in the storage 320, or may be an instruction/code at least temporarily resided in the controller 330, and the controller 330 may be a storage space storing the instruction/code, or may be a part of a circuitry configuring the controller 330. In addition, the controller 330 may include various modules for performing communication. According to various embodiments, the controller 330 may control the RU 180 to perform operations according to various embodiments, which will be described below.

FIG. 4 is a diagram illustrating an example of a function split according to various embodiments. With the development of wireless communication technology (for example, introduction of a 5^{th} generation (5G) communication system (or new radio (NR) communication system)), a using frequency band increases more, and, as a cell radius of a base station is reduced, the number of RUs required to be installed increases more. In addition, in a 5G communication system, an amount of data transmitted increases by 10 times or more, and a transmission capacity of a wired network transmitted to a fronthaul greatly increases. Due to these factors, an installation cost of the wired network in the 5G communication system may greatly increase. Accordingly, in order to reduce the transmission capacity of the wired network and reduce the installation cost of the wired network, technologies for transferring a part of functions of a modem of a DU to an RU and reducing a transmission capacity of a fronthaul have been suggested, and these technologies may be referred to as a `function split.

In order to reduce a burden to the DU, a solution for extending the role of the RU which takes charge of only an RF function to a part of functions of a physical layer is considered. In this case, as the RU performs functions of a higher layer, the throughput of the RU may increase and a transmission bandwidth at a fronthaul may increase, and also, restrictions on delay time requirements caused by response processing may be reduced. On the other hand, as the RU performs functions of a higher layer, a virtualization gain may be reduced and the size/weight/cost of the RU may increase. Considering the trade-off of the above-described advantages and disadvantages, an optical function split is required to be implemented.

Referring to FIG. 4, the function split on a physical layer under a MAC layer is illustrated. In the case of downlink (DL) of transmitting a signal to a terminal through a radio network, the base station may perform channel encoding/scrambling, modulation, layer mapping, antenna mapping, RE mapping, digital beamforming (for example, precoding), IFFT conversion/CP addition, and RF conversion in sequence. In the case of uplink (UL) of receiving a signal from the terminal through the radio network, the base station may perform RF conversion, FFT conversion/CP removal, digital beamforming (pre-combining), RE demapping, channel estimation, layer demapping, demodulation, decoding/descrambling in sequence. Split of the uplink functions and the downlink functions may be defined in various types by necessity, discussion about standards between supply vendors according to the above-described trade-off.

A first function split 405 may be a split between an RF function and a PHY function. The first function split may indicate that a PHY function in an RU is not substantially implemented, and for example, may be referred to as option 8. A second function split 410 allows the RU to perform IFFT conversion/CP addition of the PHY function in DL and to perform FFT conversion/CP removal in UL, and allows a DU to perform the other PHY functions. For example, the second function split 410 may be referred to as Option 7-1. A third function split 420a allows the RU to perform IFFT conversion/CP addition of the PHY function in DL and to perform FFT conversion/CP removal and digital beamforming in UL, and allows the DU to perform the other PHY functions. For example, the third function split 420a may be referred to as Option 7-2x Category A. A fourth function split 420a allows the RU to perform up to digital beamforming in all of DL and UL, and allows the DU to perform upper PHY functions after digital beamforming. For example, the fourth function split 420b may be referred to as Option 7-2x Category B. A fifth function split 425 allows the RU to perform up to RE mapping (or RE demapping) in all of DL and UL, and allows the DU to perform upper PHY functions after RE mapping (or RE demapping). For example, the fifth function split 425 may be referred to as Option 7-2. A sixth function split 430 allows the RU to perform up to modulation (or demodulation) in all of DL and UL, and allows the DU to perform upper PHY functions after modulation (or demodulation). For example, the sixth function split 430 may be referred to as Option 7-3. A seventh function split 440 allows the RU to perform up to encoding/scrambling (or decoding/descrambling) in all of DL and UL, and allows the DU to perform upper PHY functions after modulation (or demodulation). For example, the seventh function split 440 may be referred to as Option 6.

According to an embodiment, when signal processing of a large capacity like FR1 MMU is expected, a function split (for example, the fourth function split 420b) on a relatively high layer may be required in order to reduce a fronthaul capacity. In addition, since a function split (for example, the sixth function split 430) on a very high layer causes a control interface to be complicated and a plurality of PHY processing blocks are included in the RU, causing a burden to implementation of the RU, an appropriate function split may be required according to a deployment of a DU and an RU and an implementation method.

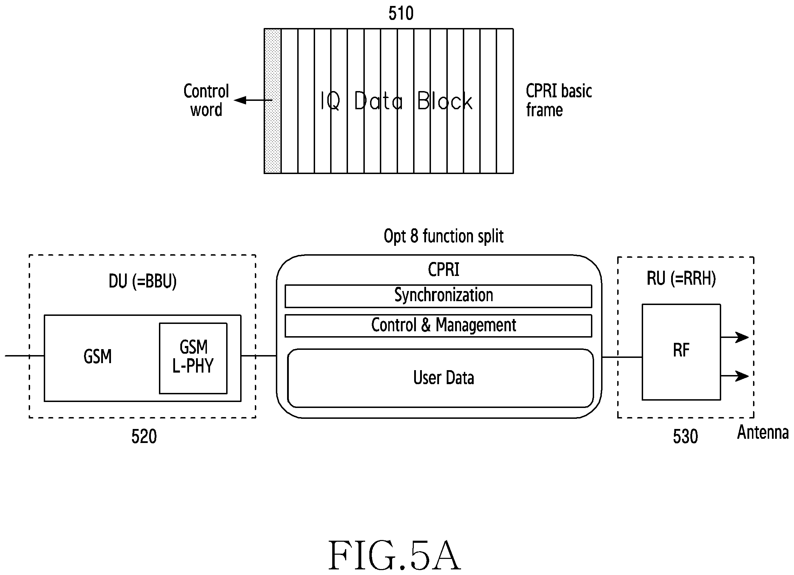

According to an embodiment, when it is not possible to process precoding of data received from the DU (that is, when there is a limit to precoding capability of the RU), the third split function 420a or a lower function split thereof (for example, the second function split 410) may be applied. To the contrary, when it is possible to process precoding of data received from the DU, the fourth function split 420b or a higher function split thereof (for example, the sixth function split 430) may be applied. In the following descriptions, embodiments of the disclosure will be described with reference to the third function split 420a (category A) or the fourth function split 420b (category B) for performing beamforming processing in the RU unless there is a special condition. However, a configuration of an embodiment implemented through other function splits is not excluded. Functional configurations, signaling or operations, which will be described below with reference to FIGS. 5A to 13, may be applied to other function splits, in addition to the third function split 420a or the fourth function split 420b.

Embodiments of the disclosure describe standards of eCPRI and O-RAN as a fronthaul interface when a message is transmitted between a DU (for example, the DU 160 of FIG. 1B) and an RU (for example, the RU 180 of FIG. 1B). An eCPRI header and an O-RAN header, and an additional field may be included in an Ethernet payload of the message. Hereinafter, various embodiments of the disclosure will be described using terms of standards of eCPRI and O-RAN, but other expressions having the same or similar meanings as the terms may be used in various embodiments of the disclosure instead.

A transport protocol of a fronthaul may use Ethernet and an eCPRI which are easily shared by a network. An eCPRI header and a header of an O-RAN may be included in an Ethernet payload. The eCPRI header may be positioned at a front end of the Ethernet payload. The eCPRI header may have the following contents:
l ecpriVersion (4 bits): 0001b (fixed value)
l ecpriReserved (3 bits): 0000b (fixed value)
l ecpriConcatenation (1 bit): 0b (fixed value)
l ecpriMessage (1 byte): Message type
l ecpriPayload (2 bytes): Payload size in bytes
l ecpriRtcid / ecpriPcid (2 bytes): x, y, z may be configured through a management plane (M-plane). A corresponding field may indicate a transport path (an eAxC (extended antenna-carrier) in the eCPRI) of a control message according to various embodiments when multi-layer transmission is performed.
n CU_Port_ID (x bits): Identifying a channel card. Identifying even a modem (2 bits for channel card, 2 bits for Modem)
n BandSector_ID (y bits): Identifying according to Cell/Sector
n CC_ID (z bits): Identifying according to Component carrier
n RU_Port_ID (w bits): Identifying according to a layer, T, antenna
l ecpriSeqid (2 bytes): Managing a sequence ID according to ecprRtcid/ecpriPcid, and managing according to a sequence ID and a subsequence ID. When the subsequence ID is used, radio-transport-level fragmentation is possible (different from application-level fragmentation).

An application protocol of the fronthaul may include a control plane (C-plane), a user plane (U-plane), a synchronization plane (S-plane), and a management plane (M-plane).

The control plane may be configured to provide scheduling information and beamforming information through a control message. The user plane may include downlink data of a user (IQ data or SSB/RS), uplink data (IQ data or SRS/RS), or PRACH data. A weight vector of the above-described beamforming information may be multiplied by data of a user. The synchronization plane may be related to timing and synchronization. The management plane may be related to initial setup, non-real time reset, or reset, non-real time report.

To define a type of a message transmitted on the control plane, a section type may be defined. The section type may indicate a purpose of a control message transmitted on the control plane. For example, the purposes by section types are as follows:
n sectionType=0: Tx blanking purpose for DL idle/guard periods - Power saveing
n sectionType=1: Mapping a BF index or weight (O-RAN mandatory BF scheme) onto an RE of DL/UL channel
n sectionType=2: reserved
n sectionType=3: Mapping a beamforming index or a weight onto an RE of PRACH and a mixed-numerology channel
n sectionType=4: reserved
n sectionType=5: Delivering UE scheduling information for the RU to calculate a real-time BF weight (O-RAN optional BF scheme)
n sectionType=6: Delivering UE channel information periodically for the RU to calculate a real-time BF weight (O-RAN optional BF scheme)
n sectionType=7: Using to support LAA

An eCPRI-based fronthaul interface currently used in the O-RAN supports an LTE communication system and an NR communication system. It is possible to support multi-cell with a few of DUs by virtualizing the DU, and accordingly, there may be a demand for a solution for supporting other communication systems in the DU. According to various embodiments of the disclosure, an eCPRI-based fronthaul interface may support global system for mobile communications (GSM). Hereinafter, in the disclosure, the GSM is illustrated as other communication system, but application of other communication methods (for example, wideband code division multiple access (WCDMA), code division multiple access (CDMA), etc.) is not excluded.

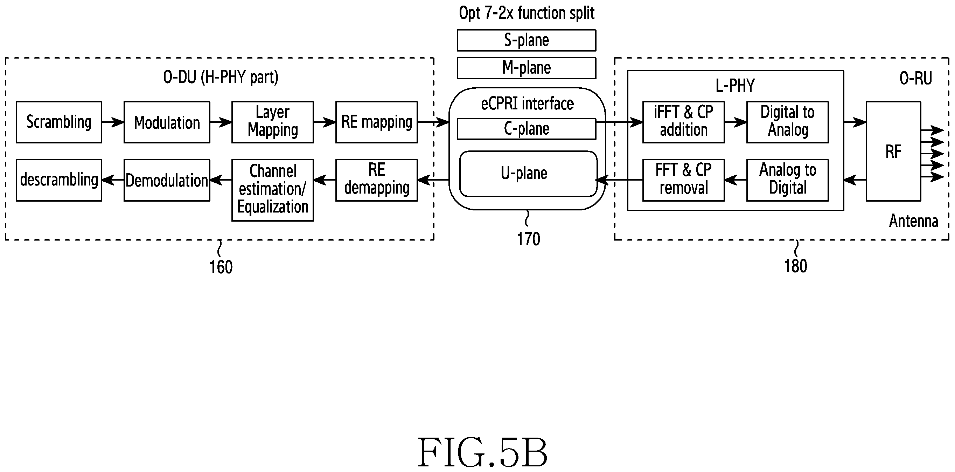

The GSM is a 2^{nd} generation communication standard, and refers to a communication method based on timed division multiplexing access (TDMA). The CPRI supports the GSM. A method for applying GSM to an eCPRI of an O-RAN based on a fronthaul interface of a CPRI will be described. Hereinafter, differences between the CPRI and the eCPRI will be described through FIGS. 5A and 5B.

FIG. 5A is a diagram illustrating an example of a common public radio interface (CPRI)-based fronthaul interface for global system for mobile communications (GSM) according to various embodiments. The CPRI refers to a protocol interface for transmitting radio waves between a radio remote unit (RRU) and a baseband unit (BBU).

Referring to FIG. 5A, the CPRI-based fronthaul interface supports transmission on a frame basis. Each frame corresponds to an antenna-carrier (AxC). A CPRI basic frame 510 includes a control part (for example, a control word) and a data part (for example, an IQ data block). Through a sub channel of the CPRI (that is, control words of the CPRI frame), control information, management information, synchronization information may be transmitted on the fronthaul interface.

The CPRI-based fronthaul interface may correspond to option 8 in the function split of FIG. 4. A DU 520 may include a low-PHY function block. An RU 530 may include only an RF function block. The DU 520 may correspond to a BBU, and the RU 530 may correspond to an RRU. That is, in a structure where the DU and the RU are split, a PHY function in the RU may not substantially be implemented, and the RU may include only the RF function.

FIG. 5B is a diagram illustrating an example of an enhanced CPRI (eCPRI)-based fronthaul interface for new radio (NR) or long term evolution (LTE) according to various embodiments. According to an embodiment, the eCPRI-based fronthaul interface for at least one of NR or LTE may be supported by an O-RAN.

Referring to FIG. 5B, a DU 160 may perform a high-PHY function and an RU 180 may perform a low-PHY function. The high-PHY function may include scrambling (or descrambling), modulation (or demodulation), layer mapping (or channel estimation), RE mapping (or RE demapping). The low-PHY function may include iFFT and CP addition (or FFT and CP removal), DAC (or ADC). According to an embodiment, the eCPRI-based fronthaul interface 170 may correspond to option 7-2x in the function split of FIG. 4. FIG. 5B does not illustrate performance of digital beamforming, but digital beamforming may be performed in the DU 160 or RU 180 according to an implementation method. For example, digital beamforming may be performed in the DU 160. In another example, digital beamforming for DL may be performed in the DU 160, and digital beamforming for UL, that is, pre-combining, may be performed in the RU 180.

An eCPRI-based fronthaul interface 170 supports a control plane message. The control plane message may include real-time control information, and a different section type may be applied according to a target scenario. The eCPRI-based fronthaul interface 170 supports a user plane message. The user plane may include IQ data and may include a section type. The eCPRI-based fronthaul interface 170 may support transmission on a timeslot basis. A packet in the eCPRI-based fronthaul interface 170 may correspond to an eAxC. The eAxC may indicate a data flow of each carrier and each antenna in a sector. In other words, a transmission path (or reception path) of a layer may correspond to an extended antenna-carrier (eAxC) in the eCPRI. The eAxC may indicate a data flow of each carrier and each antenna in a sector. The eAxC may be configured with a band sector ID, a component carrier (CC) ID, an RU port ID, a DU port ID.

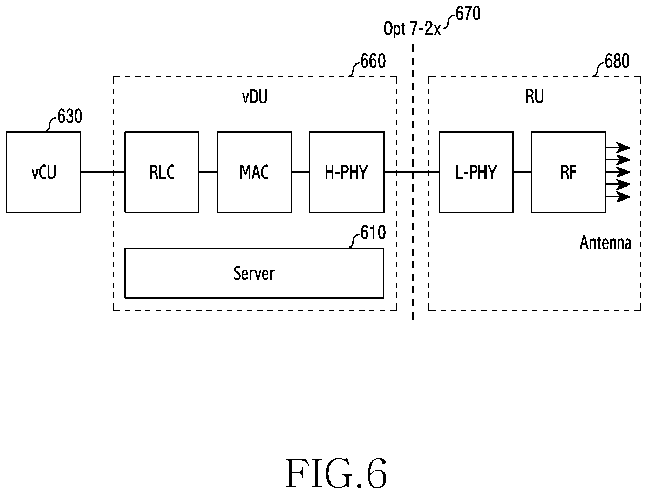

FIG. 6 is a diagram illustrating an example functional configuration of a virtualized distributed unit (vDU) according to various embodiments.

Referring to FIG. 6, a DU 660 may be virtualized in a server 610. The virtualized DU 660 may be referred to as a vDU. Virtualization refers to a technology for providing various functions in one device instead of a physical device, by abstracting computer resources which are subordinate to hardware. In the disclosure, a virtualized radio access network (vRAN) refers to a network in which virtualization is applied to a base station.

A function split 670 between the DU 660 and an RU 680 is illustrated by way of nonlimiting example by option 7-2x (category A or category B) which is a function split of FIG. 4. The DU 660 may take charge of a low-PHY function. The RU 680 may take charge of a low-PHY function.

Processing functions performed in respective base stations are integrally processed through a virtualized generic-purpose network device which is installed in a centralized station, so that efficiency increases. Since base station devices may be realized using software, the base stations may be installed and uninstalled in a similar method to a method of installing and uninstalling an application program in a computer. In a distributed deployment structure of a radio access network in which a CU 630, the DU 660, and the RU 680 are distinguished from one another, the CU and the DU may be implemented in a virtualization method. The virtualized CU 630 may be referred to as a vCU and the virtualized DU 660 may be referred to as a vDU.

The vDU is introduced for a virtualized radio access network (vRAN). A multi-cell is supported with a few CPU cores in the vDU, so that high performance and high flexibility are provided. The current vDU supports only LTE and NR. Based on the vRAN, an eCPRI-based fronthaul interface for supporting other communication systems (for example, GSM) in addition to LTE and NR may be required. The vDU according to various embodiments may support GSM. The RU according to various embodiments may support GSM. The RU supporting multi communication systems may be referred to as a multi-RAT RU. In this case, due to the limited number of CPU cores of the vDU, a new function split different from the existing function split may be required.

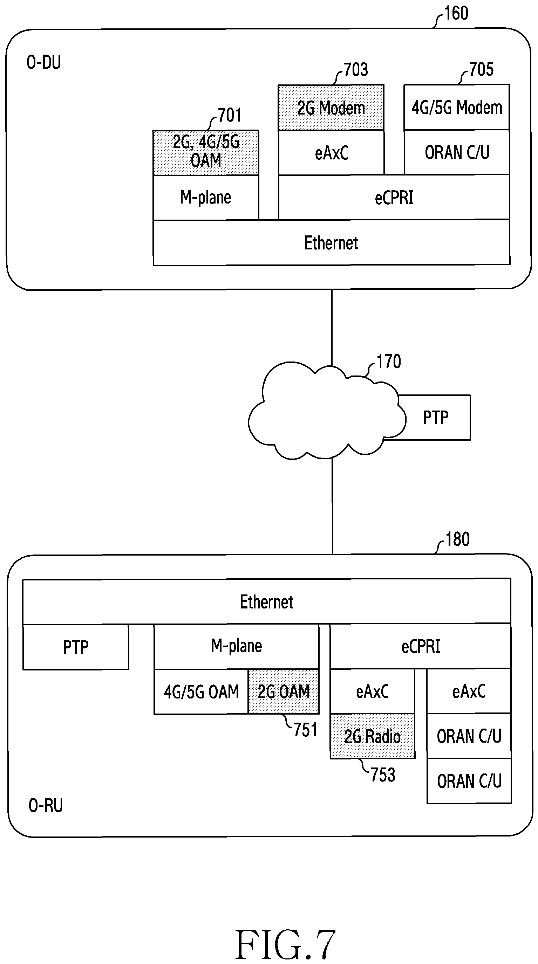

Embodiments of the disclosure disclose an eCPRI-based fronthaul interface for supporting a multi-RAT RU and a DU (or vDU). Embodiments of the disclosure provide an eCPRI-based fronthaul interface which additionally supports a GSM communication system, in addition to an LTE communication system or an NR communication system. GSM is illustrated as a communication system different from the LTE and the NR, but the disclosure does not preclude application of other communication methods (for example, wideband code division multiple access (WCDAM), code division multiple access (CDMA), etc.). Hereinafter, (1) fronthaul configuration and function split, (2) a GSM message format, and (3) a method for mapping an eAxC ID for an eCPRI-based fronthaul interface for GSM will be described through FIGS. 7 to 13.

FIG. 7 is a diagram illustrating an example of an eCPRI-based fronthaul interface for GSM according to various embodiments. In FIG. 7, a fronthaul configuration for GSM is illustrated. An O-DU is illustrated as a DU 160 and an O-RU is illustrated as an RU 180. Hereinafter, a downlink packet will be described by way of an example to explain an operation on each layer, but embodiments of the disclosure are applied to an uplink packet.

Referring to FIG. 7, the DU 160 may support Ethernet. The DU 160 may perform communication with the RU 180 through a precision time protocol (PTP). The PTP is a protocol that enables hardware-based time stamping. The PTP may support temporal synchronization for all devices on an Ethernet network.

The DU 160 may support OAM 701 through a management plane (M-plane). The OAM 701 may include 2G OAM, 4G/5G OAM. For example, 2G may include a GSM communication system. For example, 4G may include an LTE communication system. For example, 5G may include an NR communication system.

The DU 160 may deliver a data flow corresponding to an eAxC to the RU, or may receive from the RU through an eCPRI. Herein, an eAxC for 2G and an eAxC for 4G/5G may be distinguished from each other. A 2G modem 703 may be configured to map a GSM packet onto the eAxC and to deliver the same to the RU. A 4G/5G model 705 may be configure to map an LTE or NR packet onto the eAxC, and to deliver the same to the RU.

The RU 180 may perform communication with the DU 160 through the precision time protocol (PTP). The RU 180 may receive a management message by not only 4G/5G OAM but also 2G OAM 751 through a management plane.

The RU 180 may receive data corresponding to an eAxC through Ethernet and an eCPRI. According to an embodiment, the data may include an LTE packet or an NR packet. In this case, traffic transmitted through a fronthaul interface may include an IQ sample. The RU 180 may transmit a signal to an LTE radio network or an NR radio network based on the received IQ sample. According to an embodiment, the data may include a GSM packet. In this case, traffic transmitted through the fronthaul interface may include a bit stream or an IQ sample. According to a function split of the fronthaul interface for GSM, a type of traffic transmitted may vary. The type of the traffic may depend on the number of cores of the DU, a fronthaul bandwidth capacity. The RU 180 may transmit a signal to a GSM network based on the received IQ sample or bitstream. The RU 180 may further include a radio module 753 for GSM.

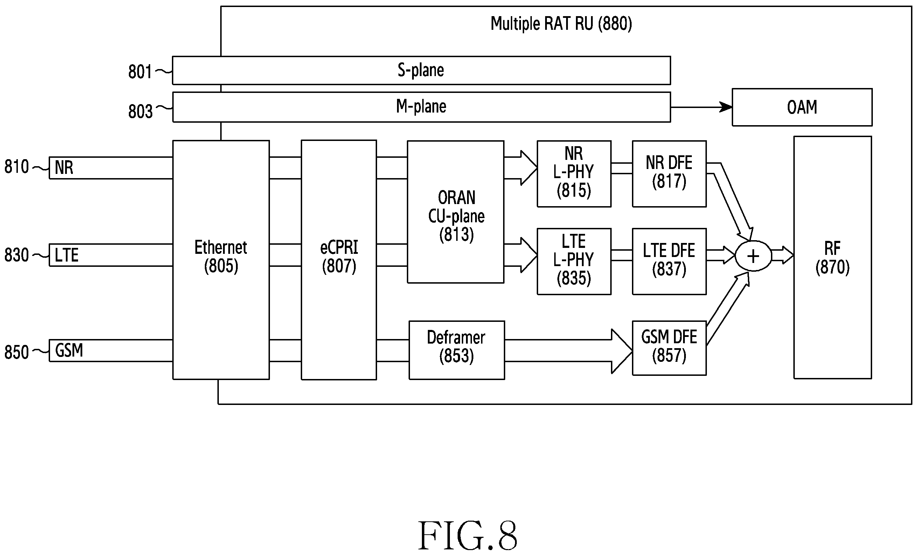

The LTE and the NR may use a fronthaul interface of an O-RAN which is an eCPRI-based fronthaul interface. In order to coexist with the LTE and the NR, an eCPRI-based fronthaul interface configuration for GSM may be required. A multi-RAT RU may be used to support GSM, LTE, and NR, simultaneously, through one RU. Hereinafter, a functional configuration of the multi-RAT RU will be described through FIG. 8.

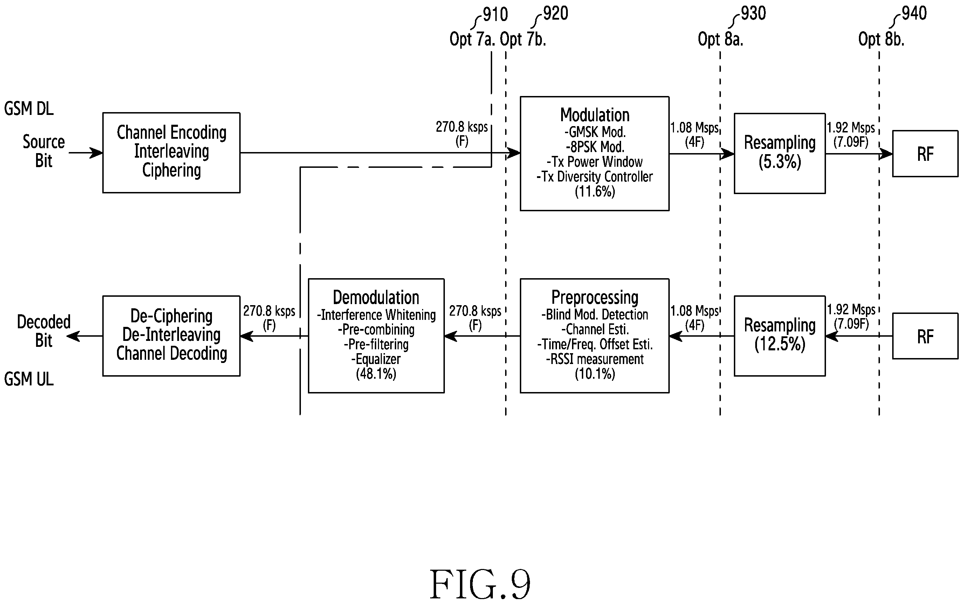

A new function split between a DU and an RU may be required for a multi-RAT RU and a vDU for GSM. A function split for GSM based on the number of cores required and a fronthaul capacity is required. A function split for GSM is proposed based on respective resources of the DU and the RU, and a capability. Hereinafter, examples of the function split for GSM will be described through FIG. 9.

FIG. 8 is a diagram illustrating an example of an RU for multi-radio access technology (RAT) according to various embodiments. In the following descriptions, the RU may be referred to as a multi-RAT RU. In FIG. 8, option 8a among options of the function split of FIG. 9, which will be described in greater below, is illustrated.

Referring to FIG. 8, the RU may include an eCPRI-based fronthaul interface. An application protocol of the RU may include a control plane (C-plane), a user plane (U-plane), a synchronization plane (S-plane) 801, and a management plane (M-plane) 803. The protocol for the management plane and the synchronization plane may be associated with operation, administration, maintenance (OAM) 880. The management plane may be related to non-real time management operations between the RU and a DU. The control plane and the user plane 813 are illustrated as one function block.

Synchronization for a GSM packet may be performed using the synchronization plane of the O-RAN. When only GSM is serviced, synchronization may be performed using the synchronization plane. The GSM may be managed using the management plane of the O-RAN or a RAN information management system (RIMS).

A transport protocol of the fronthaul of the RU may use Ethernet 805 and an eCPRI 807 which are easily shared by a network. A message of a control plane and user plane data may be transmitted between the DU and the RU through the eCPRI 807. For example, in downlink transmission, the DU may transmit a control message to the RU on the control plane. The DU may transmit IQ sample data to the RU on the user plane. The RU may process a signal received from the DU on a physical layer and then may transmit the signal to an RF block. For example, a CU-plane block of the DU may transmit an NR packet 810 to the RF block 870 through an NR low-PHY block 815 and an NR digital front end (DFE) 817. In addition, for example, the CU-plane block of the DU may transmit an LTE packet 830 to the RF block 870 through an LTE low-PHY block 835 and an LTE DFE 837. According to various embodiments of the disclosure, packetizing is supported to support GSM. Accordingly, the RU may receive a GSM packet 850 through the Ethernet 805 and the eCPRI 807, and may deliver the received GSM packet to a deframer block 853. The deframer block 853 may resample time samples of a GSM frame. The deframer block 853 may deliver the GSM packet 850 to the RF block 870 through a GSM DFE 857.

According to various embodiments of the disclosure, a DU may transmit a time sample of a GSM frame on a packet basis using Ethernet and an eCPRI protocol. A transmission end (for example, a DU) may packetize a GSM signal by transmitting IQ sample data on a time domain of an eCPRI (for example, eCPRI 1.0). In this case, a reception end (for example, an RU) may distinguish a GSM packet from an LTE packet and an NR packet through an eAxC ID. For example, in downlink transmission, the DU may packetize a GSM frame received from an upper node (for example, a CU, a core network), and may transmit the GSM packet to the RU. In addition, for example, in uplink transmission, the RU may packetize a GSM frame received from a terminal, and may transmit the GSM packet to the DU.

FIG. 9 is a diagram illustrating an example of a function split in an eCPRI-based fronthaul interface for GSM according to various embodiments. Various function split options may be used according to a resource capacity, a capability of a DU and an RU.

Referring to FIG. 9, the left side of each function split indicates responsibilities which are taken by the DU, and the right side indicates responsibilities which are taken by the RU. A physical layer function in a downlink may include channel encoding, interleaving, ciphering, modulation, resampling. For example, a modulation scheme may use Gaussian low-pass-filtered minimum shift keying (GSMK), 8-phase shift keying (8PSK). A physical layer function in an uplink may include resampling, pre-processing, demodulation, deciphering, de-interleaving. The pre-processing may include modulation scheme detection, channel estimation, resource offset estimation, quality measurement (for example, RSSI measurement). The demodulation may include interference whitening, pre-combining, pre-filtering, equalization.

In a first function split 910, both modulation and demodulation may be performed in the RU. The DU may take charge of a ciphering (or deciphering) function, an interleaving (or deinterlaving) function, a channel encoding (or channel decoding) function. Based on the names of the function split of FIG. 4, the first function split 910 may be referred to as option 7a. In the first function split 910, a message transmitted through a fronthaul interface may include one or more bitstreams.

In a second function split 920, modulation of a downlink may be performed in the RU, and demodulation of an uplink may be performed in the DU. The DU may take charge of the ciphering (or deciphering) function, the interleaving (or deinterleaving) function, the channel encoding (or channel decoding) function, the demodulation function. In the second function split 920, the DU may additionally take charge of the demodulation function compared to that in the first function split 910. Based on the names of the function split of FIG. 4, the second function split 920 may be referred to as option 7b. In the case of DL in the second function slit 920, a message transmitted through the fronthaul interface may include one or more bitstreams. In the case of UL in the second function split 920, a message transmitted through the fronthaul interface may include one or more IQ samples. Since the transmission is performed before demodulation with reference to UL, a burden to the DU may relatively increase compared to that in the first function split 910.

In a third function split 930, resampling may be performed in the RU. The RU may take charge of an RF function and a resampling function. All low-PHY functions may be performed in the DU. Based on the names of the function split of FIG. 4, the third function split 930 may be referred to as option 8a. In the third function split 930, a message transmitted through the fronthaul interface may include one or more IQ samples. Since all of substantial physical layer functions are performed in the DU and transmission is performed before demodulation, a burden to the DU may relatively increase compared to that in the first function split 910 and the second function split 920.

In a fourth function split 940, resampling may be performed in the DU. The RU may take charge of only the RF function. Based on the names of the function split of FIG. 4, the fourth function split 940 may be referred to as option 8b. In the fourth function split 940, a message transmitted through the fronthaul interface may include one or more IQ samples. Since all of substantial physical layer functions are performed in the DU, and resampling is also performed in the DU, a burden to the DU may relatively increase compared to that in the third function split 930.

Performance according to each function split may be summarized as shown in table 1 presented below:

**[Table 1]**

| GSM F/S | Option 7a (LPHY at RU) | Option 7b (LPHY at RU) | Option 8a (Resampler@RU) | Option 8b (Resampler@DU) |
|---|---|---|---|---|
| CPU Load | About 12% | About 60% | About 82% | 100%(7.5 core) |
| FH BW | About 330∼360 Mbps(on the assumption of 16bit LLR / 8PSK) | About 460∼510 Mbps | About 1700∼1900 Mbps | About 3000∼3300 Mbps |
| FH IF | Great change | | Minor change | |

Referring table 1, as a low-PHY function is performed in the RU, there is a great change in the RU in option 7a and option 7b. A burden to a CPU of a vDU in option 7a and option 7b may be relatively reduced compared to that in option 8a and option 8b. To the contrary, as the low-PHY function is performed in the DU, there is a relatively small change in the RU in option 8a and option 8b. A burden to the CPU of the vDU in option 8a and 8b may be relatively great compared to that in option 7a and option 7b.

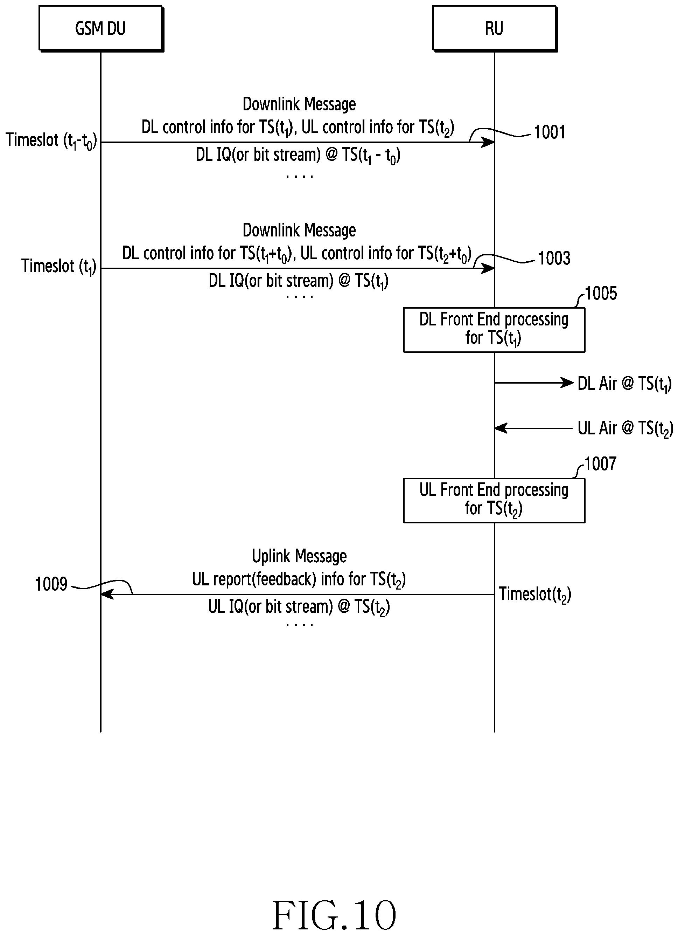

Hereinafter, examples of message transmission between a DU and an RU, a protocol stack, and a format according to the eCPRI-based fronthaul interface for GSM and the function split described above will be described in FIGS. 10 to 13.

FIG. 10 is a signal flow diagram illustrating an example of signaling between a DU and an RU in an eCPRI-based fronthaul interface for GSM according to various embodiments. In the following descriptions, a DU supporting the eCPRI-based fronthaul interface for GSM is referred to as a GSM DU. A 'slot' in the GSM may refer, for example, to a timeslot and 8 timeslots may correspond to one timed division multiplexing access (TDMA) frame. Each timeslot may have a time duration of 3/5200 second (about 0.577 ms) and a timeslot number between 0 and 7.

Unlike an existing O-RAN message, a control plane message and a user plane message may be confisured as one command message in the ePPRI for GSM. Accordingly, control information and data may be included in one downlink message or uplink message. The common message may include a downlink signal or an uplink signal corresponding to control information (for example, frequency hopping, gain control, UL feedback information).

Referring to FIG. 10, in 1001, the GSM DU may transmit a downlink message to the RU. The GSM DU may transmit the downlink message to the RU for a timeslot t₁-t₀. According to an embodiment, the downlink message may include downlink control information regarding a timeslot t₁. According to an embodiment, the downlink message may include uplink control information regarding a timeslot t₂. According to an embodiment, the downlink message may include DL data regarding the timeslot t₁-t₀. For example, the data may include IQ sample data. In another example, the data may include a bitstream. A type of data may vary according to a GSM function split (for example, options of the function split of FIG. 9) between the DU and the RU.

In 1003, the GSM DU may transmit a downlink message to the RU. The GSM DU may transmit the downlink message to the RU for the timeslot t₁. According to an embodiment, the downlink message may include downlink control information regarding a timeslot t₁+t₀. According to an embodiment, the downlink message may include uplink control information regarding a timeslot t₂+t₀. According to an embodiment, the downlink message may include DL data regarding the timeslot t₁. For example, the data may include IQ sample data. In another example, the data may include a bitstream. A type of data may vary according to a GSM function split (for example, options of the function split of FIG. 9) between the DU and the RU.

The GSM DU may transmit an eCPRI-based message for each transceiver (TRX) for every timeslot. That is, t₀ may indicate a length of a timeslot. TRX refers to each transceiver for an RF function block of the RU.

In 1005, the RU may perform downlink processing. The RU may perform processing with respect to the received downlink message. Thereafter, the RU may transmit a downlink message regarding the timeslot t₁ to a terminal.

In 1007, the RU may perform uplink processing. The RU may perform processing with respect to an uplink message to transmit. The RU may receive an uplink message regarding the timeslot t₂ from the terminal. The RU may process the received uplink message.

In 1009, the RU may transmit the uplink message to the GSM DU. The RU may transmit the uplink message to the GSM DU for the timeslot t₂. According to an embodiment, the uplink message may include UL feedback information regarding the timeslot t₂. According to an embodiment, the uplink message may include UL data regarding the timeslot t₂. For example, the data may include IQ sample data. In another example, the data may include a bitstream. A type of data may vary according to a GSM function split (for example, options of the function split of FIG. 9) between the DU and the RU.

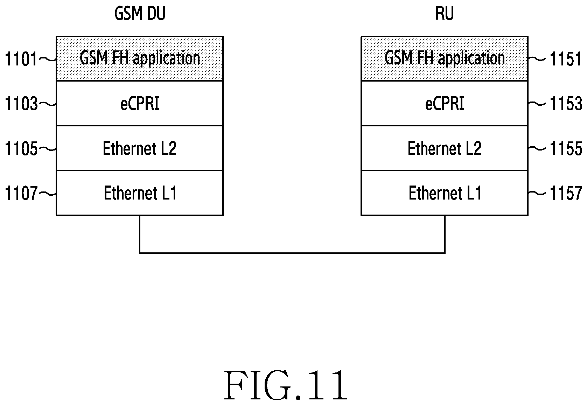

FIG. 11 is a diagram illustrating an example protocol stack between a DU and an RU in an eCPRI-based fronthaul interface for GSM according to various embodiments. A layer positioned at a lower position may refer to a lower layer. That is, an eCPRI layer, an Ethernet L2 layer, an Ethernet L1 layer may be positioned under a fronthaul application layer in sequence.

Referring to FIG. 11, the GSM DU may include an application layer 1101, an eCPRI layer 1103, an Ethernet L2 layer 1105, an Ethernet L1 layer 1107. The RU may include a fronthaul application layer 1151, an eCPRIlayer 1153, an Ethernet L2 layer 1155, an Ethernet L1 layer 1157.

Through Ethernet communication, the Ethernet L2 layer 1105 may be associated with the Ethernet L2 layer 1155. Through Ethernet communication, the Ethernet L1 layer 1107 may be associated with the Ethernet L1 layer 1157. Through eCPRI-based communication, the eCPRI layer 1103 and the eCPRI layer 1153 may be associated with each other.

For eCPRI-based communication, each message may include an eCPRI header and an eCPRI payload. The eCPRI-based message may include an eCPRI message, a payload size, an eAxC ID, a sequence ID.

A GSM packet may be delivered between the fronthaul application layer 1101 and the fronthaul application layer 1151. The GSM packet may be delivered as IQ sample data or may be delivered in the form of a bitstream according to a function split illustrated in FIG. 9.

According to an embodiment, the GSM packet of the fronthaul application layer may include DL/UL IQ samples (or bitstream). The DL/UL IQ samples may include a user plane message. According to an embodiment, the GSM packet may include frame numbers for the DL/UL IQ samples (or bitstream), and timeslots for the DL/UL IQ samples (or bitstream). This is because the GSM supports frame-based transmission, but the DU performs packetizing to deliver the GSM packet in the eCPRI-based fronthaul interface.

According to an embodiment, the GSM packet of the fronthaul application layer may include control information for DL or UL. The control information may include a downlink control plane message. Like a user plane, the GSM packet may include a frame number for the control information and a timeslot for the control information.

According to an embodiment, the GSM packet of the fronthaul application layer may include UL report (feedback) information. The UL report information may include an uplink control plane message. Like the user plane, the GSM packet may include a frame number for the control information and a timeslot for the control information.

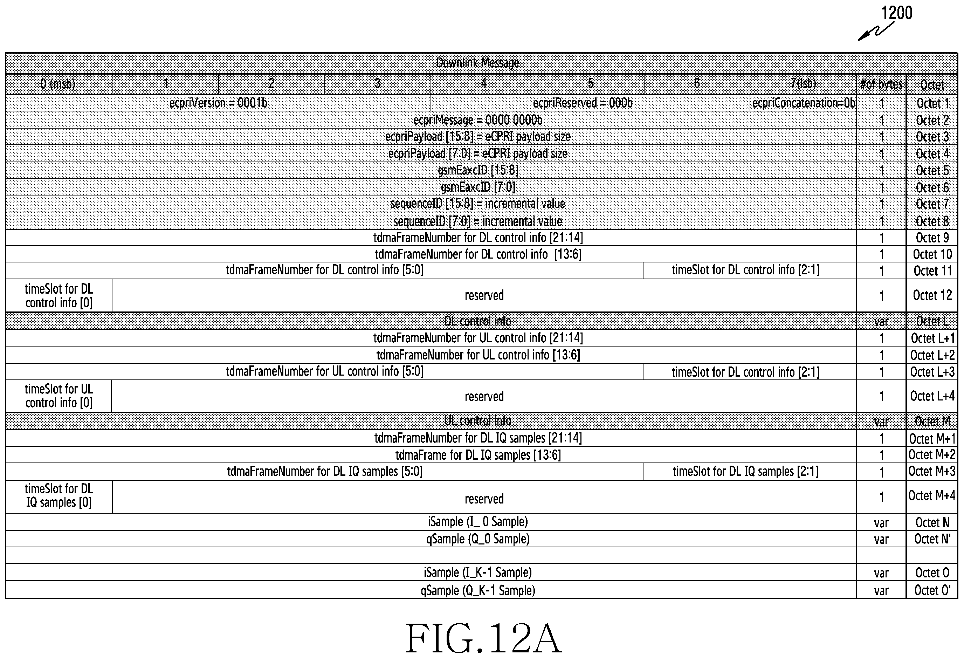

FIG. 12A is a diagram illustrating an example downlink message for a GSM packet in an eCPRI-based fronthaul interface for GSM according to various embodiments.

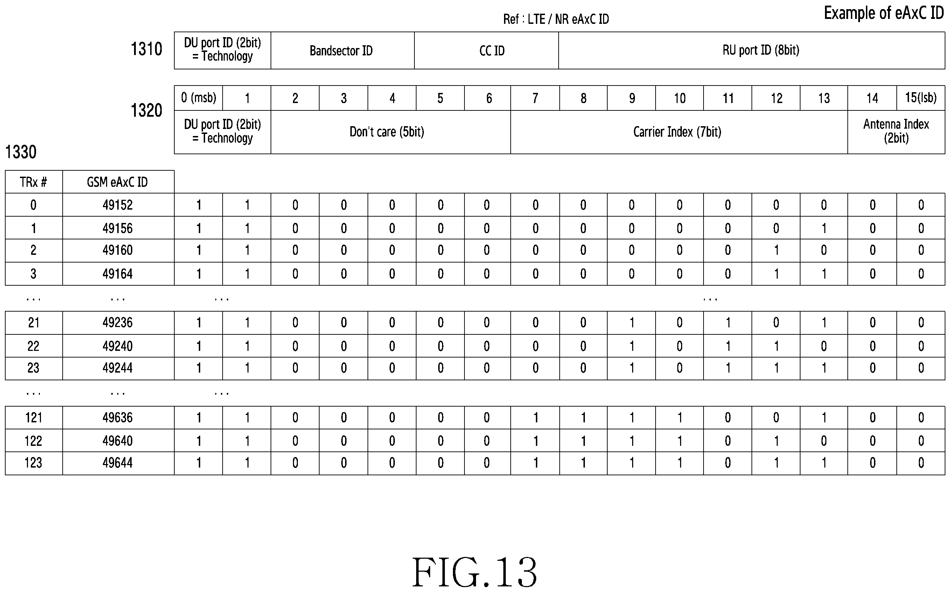

Referring to FIG. 12A, for eCPRI transmission, a downlink message 1200 may include an eCPRI header and an eCPRI payload. The eCPRI header may include `ecpriVersion,' 'ecpriMessage,' 'ecpriPayload,' 'gsmEaxcID,' 'sequence ID.'
'ecpriVersion' indicates a version of an eCPRI protocol.
'ecpriMessage' indicates a type of an eCRPI message.
'ecpriPayload' indicates a payload size.
'gsmEaxcID' may indicate an eAxC ID of the GSM packet according to various embodiments of the disclosure. An eAxC may be assigned to the GSM packet in order to indicate a data flow of each timeslot and each TRX of the GSM packet. The eAxC indicated by 'gsmEaxcID' may be used to identify an endpoint in an O-RU. An eAxC ID value may be unique to all endpoints of the O-RU of the same direction (Tx or Rx). A specific design regarding assignment of the eAxC to the GSM packet will be described through FIG. 13.
'sequenceID' may be used to identify a message in a message stream and provide a sequence. According to an embodiment, a first octet of 'sequenceID' may be used to determine whether all messages are received, and to reorder messages which are out of sequence. In addition, a second octet of 'sequenceID' may be used to perform reordering resulting from fragmentation.

According to various embodiments of the disclosure, the downlink message 1200 for the GSM packet in the eCPRI may include downlink control information. The downlink control information may correspond to `DL control info.' According to an embodiment, an octet size of the downlink control information (that is, the number of bytes) may be variable.

According to various embodiments of the disclosure, the downlink message 1200 for the GSM packet in the eCPRI may include time information for downlink control information. The GSM supports frame-based transmission. A frame may include 8 timeslots. If a message is configured on a frame basis in a CPRI-based fronthaul interface, a message may be configured on a timeslot basis in the eCPRI-based fronthaul interface. In order to indicate a GSM packet corresponding to a specific timeslot in the frame, the downlink message 1200 may further include information regarding a frame number and a timeslot. The information regarding the frame number may correspond to `tdmaFrameNumber for DL control info.' The information regarding the timeslot may further include information regarding `timeSlot for DL control info.' In order to indicate one of the 8 timeslots, the information regarding the timeslot may be configured by 3-bit.

According various to various embodiments of the disclosure, the downlink message 1200 for the GSM packet in the eCRPI may include uplink control information. The uplink control information corresponds to 'UL control info.' According to an embodiment, an octet size (that is, the number of bytes) of the uplink control information may be variable. According to various embodiments of the disclosure, the downlink message 1200 for the GSM packet in the eCPRI may include time information for the uplink control information. Like downlink control information, the downlink message 1200 may further include information regarding the frame number and the timeslot in order to indicate a GSM packet corresponding to a specific timeslot in the frame. The information regarding the frame number corresponds to 'tdmaFrameNumber for UL control info.' The information regarding the timeslot may further include information regarding `timeSlot for UL control info.' The information regarding the timeslot may be configured by 3-bit in order to indicate one of the 8 timeslots.

According to various embodiments of the disclosure, the downlink message 1200 for the GSM packet in the eCPRI may include downlink data. The downlink data corresponds to 'iSample' and `qSample.' According to an embodiment, a size of a data area may be variable. FIG. 12A illustrates IQ data as a format of downlink data, but a field indicating a bitstream may be used instead of `iSample' and `qSample' parts according to an embodiment of the disclosure. For example, since the DU delivers data to the RU on a bitstream basis according to the function split of option 7a or option 7b of FIG. 9, a field indicating a bitstream may be used.

According to various embodiments of the disclosure, the downlink message 1200 for the GSM packet in the eCPRI may include time information for the downlink data. The downlink message 1200 may further include information regarding the frame number and the timeslot in order to indicate a GSM packet corresponding to a specific timeslot in the frame. The information regarding the frame number corresponds to `tdmaFrameNumber for DL IQ samples'. The information regarding the timeslot may further include information regarding `timeSlot for DL IQ samples.' The information regarding the timeslot may be configured by 3-bit in order to indicate one of the 8 timeslots.

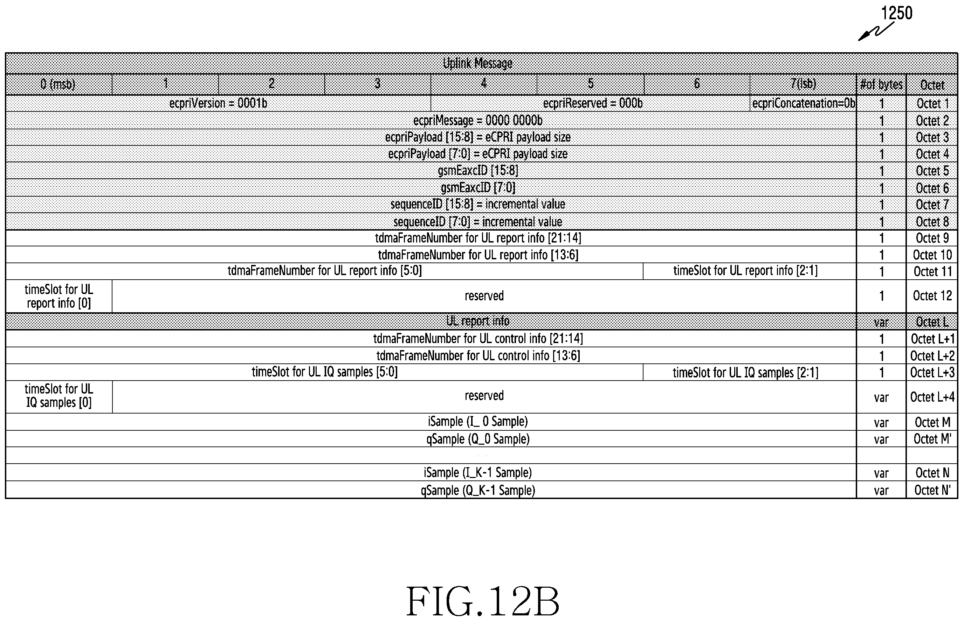

FIG. 12B is a diagram illustrating an example uplink message for a GSM packet in an eCPRI-based fronthaul interface for GSM according to various embodiments.

Referring to FIG. 12B, for eCPRI transmission, the uplink message 1250 may include an eCPRI header and an eCPRI payload. Explanations of FIG. 12A may be applied to the field of the same name in the same or similar way.

According to various embodiments of the disclosure, the uplink message 1250 for the GSM packet in the eCRPI may include uplink report information. The uplink report information corresponds to `UL report info.' According to an embodiment, an octet size (that is, the number of bytes) of the uplink report information may be variable. According to various embodiments of the disclosure, the uplink message 1250 for the GSM packet in the eCPRI may include time information for the uplink report information. The uplink message 1250 may further include information regarding a frame number and a timeslot in order to indicate a GSM packet corresponding to a specific timeslot in the frame. The information regarding the frame number corresponds to `tdmaFrameNumber for UL report info.' The information regarding the timeslot may further include information regarding 'timeSlot for UL report info.' The information regarding the timeslot may be configured by 3-bit in order to indicate one of the 8 timeslots.

According to various embodiments of the disclosure, the uplink message 1250 for the GSM packet in the eCPRI may include uplink data. The uplink data corresponds to 'iSample' and 'qSample.' According to an embodiment, a size of a data area may be variable. FIG. 12B illustrates IQ data as a format of uplink data, but a field indicating a bitstream may be used instead of 'iSample' and 'qSample' parts according to an embodiment of the disclosure. For example, since the RU delivers data to the DU on a bitstream basis according to the function split of option 7a of FIG. 9, a field indicating a bitstream may be used.

According to various embodiments of the disclosure, the uplink message 1250 for the GSM packet in the eCPRI may include time information for the uplink data. The uplink message 1250 may further include information regarding the frame number and the timeslot in order to indicate a GSM packet corresponding to a specific timeslot in the frame. The information regarding the frame number corresponds to `tdmaFrameNumber for UL IQ samples'. The information regarding the timeslot may further include information regarding 'timeSlot for UL IQ samples.' The information regarding the timeslot may be configured by 3-bit in order to indicate one of the 8 timeslots.

The eCPRI-based fronthaul interface for GSM according to various embodiments of the disclosure may support one message which integrates a user plane message and a control plane message. That is, control information (for example, `DL control info,' `LTL control info,' 'UL report info' of FIG. 12A) corresponding to a control plane message of O-RAN standards, and IQ sample data (or bitstream) corresponding to a user plane message may be integrated into one message. UL report information may refer to a control plane message that the RU delivers to the DU.

In various embodiments, the control information for GSM may include information of the control plane message of O-RAN standards. According to an embodiment, the control information may include LTE scheduling information. According to an embodiment, the control information may include channel information. According to an embodiment, the control information may include information regarding a resource block or a symbol which is not used. According to an embodiment, the control information may include information regarding modulation and compression. According to an embodiment, the control information may include information regarding discontinuous PRB assignment. According to an embodiment, the control information may include information regarding DSS parameters. According to an embodiment, the control information may include information regarding multi-port grouping. According to an embodiment, the control information may include information regarding discontinuous PRB assignment and a frequency range. According to an embodiment, the control information may include information regarding frequency hopping. According to an embodiment, the control information may include information regarding nulling layer information. According to an embodiment, the control information may include information regarding mixed numerology information. According to an embodiment, the control information may include information regarding a user port group indication. According to an embodiment, the control information may include information regarding uplink transmission management.

The above-described control information is merely an example, and is not to be interpreted as limiting various embodiments of the disclosure. In addition, at least two pieces of information of the above-described information may be included in one message and may be transmitted.

FIG. 13 is a diagram illustrating an example of mapping between a GSM packet and an extended antenna carrier (eAxC) according to various embodiments. FIG. 13 illustrates an example solution for mapping a GSM frame and an eAxC ID. In an eCPRI-based fronthaul interface following O-RAN standards, a data flow for an LTE packet or an NR packet may be associated with an eAxC ID.

Referring to FIG. 13, an eAxC ID 1310 of O-RAN standards may include various subfields. According to an embodiment, the eAxC ID may be 2 bytes long and may be subdivided as follows:
1) DU_Port_ID: This is used to identify a processing device in an O-DU (for example, a different baseband card). The O-DU may assign bits for DU_Port_ID, and an O-RU may attach the same value to a user plane message which carries data of the same sectionId to deliver.
2) BandSector_ID: This is an aggregated cell identifier (to identify a band and a sector supported by the O-RU).
3) CC_ID: This is used to identify a carrier component supported in the O-RU.
4) RU_Port_ID: This is used to designate a logical flow such as data layers or spatial stream, and a logical flow such as separate numerology (for example, a physical random access channel (PRACH)) or signal channels requiring special antenna assignment such as SRS. Assignment of DU_port_ID, BandSector_ID, CC_ID, and RU_Port_ID as a part of the eAxC ID may be performed by the O-DU through a management plane.

A GSM packet may be mapped onto an eAxC ID to control a data flow for GSM in the eCPRI-based fronthaul interface. Accordingly, an eAxC ID 1320 for GSM may be needed to be configured so as to correspond to subfields of the existing eAxC ID 1310. Each TRX of the GSM may be mapped onto the eAxC ID. The DU may assign the eAxC ID to each TRX port of GSM. According to an embodiment, the eAxC ID of the GSM may be configured with the same bit length (for example, 16-bit) as an eAxC ID for an LTE packet or an NR packet.

According to an embodiment, the eAxC ID 1320 for GSM may include a plurality of subfields in a similar method to that for the eAxC ID for the LTE packet or NR packet. The eAxC ID 1320 for GSM may include a radio access technology indicator, a carrier index, an antenna index.

According to an embodiment, the eAxC ID 1320 for GSM may include the radio access technology indicator instead of DU_Port_ID. The radio access technology indicator may indicate an RAT associated with a corresponding packet. For a GSM packet according to various embodiments of the disclosure, the radio access technology indicator may indicate GSM. For example, at least one bit corresponding to DU_Port_ID indicates a designated value, thereby indicating the GSM. That is, DU_Port_ID may be used to distinguish between technologies. DU_Port_ID of a GSM packet may be assigned a specific number in order to distinguish between GSM and LTE/NR.

According to an embodiment, a bitstream corresponding to BandSector_ID may be disregarded. The GSM may not use a sector. That is, in order to make BandSector_ID have a bit length of 16, a subfield corresponding to BandSector_ID of the eAxC ID 1310 for LTE or NR may be filled with a certain value (for example, 0). According to an embodiment, a carrier index of the eAxC ID 1320 for GSM may correspond to CC ID of the eAxC ID 1310 for LTE or NR. According to an embodiment, an antenna index of the eAxC ID 1320 for GSM may correspond to RU_Port_ID of the eAxC ID 1310 for LTE or NR. As shown in FIG. 13, even if two subfields correspond to each other, the subfields may be configured to have different bit lengths. The DU which receives a GSM packet may interpret the eAxC according to a designated method for GSM. According to an embodiment, the eAxC ID 1320 for GSM may be used for a downlink and an uplink in common.

Performance of the eCPRI-based fronthaul interface for GSM according to various embodiments of the disclosure and the existing CPRI-based fronthaul interface may be shown in table 2 presented below:

**[Table 2]**

| | Existing CPRI I/F | GSM eCPRI I/F | | | |
|---|---|---|---|---|---|
| | | Option 7a (LPHY at RU) | Option 7b (LPHY at RU) | Option 8a (Resampler@RU ) | Option 8b (Resampler@D U) |
| Transmissi on standards | CPRI | eCPRI | | | |
| Capacity per GSM carrier | 102 Mbps | 14∼16 Mbps | 19∼21 Mbps | 71∼80 Mbps | 125∼138 Mbps |
| 24 carriers capacity | 2448 Mbps | 112∼124 Mbps | 152∼168 Mbps | 568∼625 Mbps | 1000∼1100 Mbps |
| C/U-Timing adjustment | Frame-based config | Time slot-based config | | | |

Referring to table 2, a capacity refers to a fronthaul bandwidth. With reference to frequency hopping of 8-carrier, a 24-carrier capacity in the existing CPRI interface increases by 24 times compared to a capacity per GSM carrier, but, in the eCPRI interface, a 24-carrier capacity increases by only 8 times compared to a capacity per GSM carrier. Even if the CPRI-based interface supports frequency hopping on an 8-carrier basis, all packets regarding 24 carriers should be transmitted. However, in the eCPRI-based interface, packets may be transmitted on a carrier basis, and accordingly, the fronthaul bandwidth may have a capacity of 8 carriers even when packets for 24 carriers are transmitted. That is, the eCPRI interface may support GSM packet transmission between the DU and the RU with a relatively small bandwidth.

According to various example embodiments of the disclosure, a method performed by a distributed unit (DU) in a wireless communication system may include: generating a frame of global system for mobile communications (GSM); acquiring a GSM packet corresponding to a timeslot of the frame based on packetizing of the frame of the GSM; and transmitting a message including the GSM packet to a radio unit (RU) through an enhanced common public radio interface (eCPRI)-based fronthaul interface, and the message may include at least one of data corresponding to the GSM packet, information regarding a number of the frame, or information regarding a number of the timeslot.

According to an embodiment, the data may include IQ sample data caused by modulation of the GSM packet, or a bitstream corresponding to the GSM packet.

According to an embodiment, the GSM packet may include control information corresponding to a control plane (C-plane), and user data corresponding to a user plane (U-plane).

According to an embodiment, the DU may be configured to take charge of modulation and demodulation functions, and the RU may be configured to take charge of resampling of the GSM packet and an RF function.

According to an embodiment, the DU may be configured to take charge of resampling of the GSM packet, and the RU may be configured to take charge of an RF function of the GSM packet.

According to an embodiment, the DU may be configured to take charge of channel encoding and channel decoding, and the RU may be configured to take charge of modulation, demodulation, resampling, and an RF function of the GSM packet.

According to an embodiment, the DU may be configured to take charge of channel encoding, channel decoding, demodulation of the GSM packet, and the RU may be configured to take charge of modulation, resampling, and an RF function of the GSM packet.

According to an embodiment, the message may further include an extended antenna-carrier (eAxC) identifier (ID) corresponding to the GSM packet, the eAxC ID being assigned by the DU, the eAxC ID may be 16 bits long, and the eAxC ID may indicate a radio access technology indicator for indicating GSM, a carrier index, and an antenna index.

According to various embodiments of the disclosure, a method performed by a radio unit (RU) in a wireless communication system may include: receiving, from a distributed unit (DU) through an enhanced common public radio interface (eCPRI)-based fronthaul interface, a message including a GSM packet corresponding to a timeslot in a frame of global system for mobile communications (GSM); and transmitting the GSM packet to a terminal for the timeslot based on the message, wherein the message may include at least one of data corresponding to the GSM packet, information regarding a number of the frame, or information regarding a number of the timeslot.

According to an embodiment, the data may include IQ sample data caused by modulation of the GSM packet, or a bitstream corresponding to the GSM packet.

According to an embodiment, the GSM packet may include control information corresponding to a control plane (C-plane), and user data corresponding to a user plane (U-plane).

According to an embodiment, the DU may be configured to take charge of modulation and demodulation functions, and the RU may be configured to take charge of resampling of the GSM packet and an RF function.

According to an embodiment, the DU may be configured to take charge of resampling of the GSM packet, and the RU may be configured to take charge of an RF function of the GSM packet.

According to an embodiment, the DU may be configured to take charge of channel encoding and channel decoding, and the RU may be configured to take charge of modulation, demodulation, resampling, and an RF function of the GSM packet.

According to an embodiment, the DU may be configured to take charge of channel encoding, channel decoding, demodulation of the GSM packet, and the RU may be configured to take charge of modulation, resampling, and an RF function of the GSM packet.

According to an embodiment, the message may further include an extended antenna-carrier (eAxC) identifier (ID) corresponding to the GSM packet, the eAxC ID being assigned by the DU, the eAxC ID may be 16 bits long, and the eAxC ID may indicate a radio access technology indicator for indicating GSM, a carrier index, and an antenna index.

According to various embodiments of the disclosure, an apparatus of a distributed unit (DU) in a wireless communication system may include: at least one transceiver, and at least one processor coupled with the at least one transceiver, and the at least one processor may be configured to: generate a frame of global system for mobile communications (GSM); acquire a GSM packet corresponding to a timeslot of the frame based on packetizing of the frame of the GSM; and transmit a message including the GSM packet to a radio unit (RU) through an enhanced common public radio interface (eCPRI)-based fronthaul interface, wherein the message may include at least one of data corresponding to the GSM packet, information regarding a number of the frame, or information regarding a number of the timeslot.

According to an embodiment, the data may include IQ sample data caused by modulation of the GSM packet, or a bitstream corresponding to the GSM packet.

According to an embodiment, the GSM packet may include control information corresponding to a control plane (C-plane), and user data corresponding to a user plane (U-plane).

According to an embodiment, the DU may be configured to take charge of modulation and demodulation functions, and the RU may be configured to take charge of resampling of the GSM packet and an RF function.

According to an embodiment, the DU may be configured to take charge of resampling of the GSM packet, and the RU may be configured to take charge of an RF function of the GSM packet.

According to an embodiment, the DU may be configured to take charge of channel encoding and channel decoding, and the RU may be configured to take charge of modulation, demodulation, resampling, and an RF function of the GSM packet.

According to an embodiment, the DU may be configured to take charge of channel encoding, channel decoding, demodulation of the GSM packet, and the RU may be configured to take charge of modulation, resampling, and an RF function of the GSM packet.

According to an embodiment, the message may further include an extended antenna-carrier (eAxC) identifier (ID) corresponding to the GSM packet, the eAxC ID being assigned by the DU, the eAxC ID may be 16 bits long, and the eAxC ID may indicate a radio access technology indicator for indicating GSM, a carrier index, and an antenna index.

According to various embodiments of the disclosure, an apparatus of a radio unit (RU) in a wireless communication system may include: at least one transceiver and at least one processor coupled with the at least one transceiver, and the at least one processor may be configured to: receive, from a distributed unit (DU) through an enhanced common public radio interface (eCPRI)-based fronthaul interface, a message including a GSM packet corresponding to a timeslot in a frame of global system for mobile communications (GSM); and transmit the GSM packet to a terminal for the timeslot based on the message, wherein the message may include at least one of data corresponding to the GSM packet, information regarding a number of the frame, or information regarding a number of the timeslot

According to an embodiment, the data may include IQ sample data caused by modulation of the GSM packet, or a bitstream corresponding to the GSM packet.

According to an embodiment, the GSM packet may include control information corresponding to a control plane (C-plane), and user data corresponding to a user plane (U-plane).

According to an embodiment, the DU may be configured to take charge of modulation and demodulation functions, and the RU may be configured to take charge of resampling of the GSM packet and an RF function.

According to an embodiment, the DU may be configured to take charge of resampling of the GSM packet, and the RU may be configured to take charge of an RF function of the GSM packet.

According to an embodiment, the DU may be configured to take charge of channel encoding and channel decoding, and the RU may be configured to take charge of modulation, demodulation, resampling, and an RF function of the GSM packet.

According to an embodiment, the DU may be configured to take charge of channel encoding, channel decoding, demodulation of the GSM packet, and the RU may be configured to take charge of modulation, resampling, and an RF function of the GSM packet.

According to an embodiment, the message may further include an extended antenna-carrier (eAxC) identifier (ID) corresponding to the GSM packet, the eAxC ID being assigned by the DU, the eAxC ID may be 16 bits long, and the eAxC ID may indicate a radio access technology indicator for indicating GSM, a carrier index, and an antenna index.

According to various embodiments of the disclosure, a method performed by a radio unit (RU) in a wireless communication system may include: receiving a frame of global system for mobile communications (GSM) from a terminal; acquiring a GSM packet corresponding to a timeslot of the frame based on packetizing of the frame of the GSM; and transmitting a message including the GSM packet to a distributed unit (DU) through an enhanced common public radio interface (eCPRI)-based fronthaul interface, wherein the message may include data corresponding to the GSM packet, information regarding a number of the frame, and/or information regarding a number of the timeslot.

According to various embodiments of the disclosure, a method performed by a distributed unit (DU) in a wireless communication system may include: receiving, from a radio unit (RU) through an enhanced common public radio interface (eCPRI)-based fronthaul interface, a message including a GSM packet corresponding to a timeslot in a frame of global system for mobile communications (GSM); and transmitting the GSM packet to an upper node for the timeslot based on the message, wherein the message may include at least one of data corresponding to the GSM packet, information regarding a number of the frame, or information regarding a number of the timeslot.

According to various embodiments of the disclosure, an apparatus of a radio unit (RU) in a wireless communication system may include: at least one transceiver and at least one processor coupled with the at least one transceiver, and the at least one processor may be configured to: receive a frame of global system for mobile communications (GSM) from a terminal; acquire a GSM packet corresponding to a timeslot of the frame based on packetizing of the frame of the GSM; and transmit a message including the GSM packet to a distributed unit (DU) through an enhanced common public radio interface (eCPRI)-based fronthaul interface, wherein the message may include at least one of data corresponding to the GSM packet, information regarding a number of the frame, or information regarding a number of the timeslot.

According to various embodiments of the disclosure, an apparatus of a distributed unit (DU) in a wireless communication system may include: at least one transceiver and at least one processor coupled with the at least one transceiver, and the at least one processor may be configured to: receive, from a radio unit (RU) through an enhanced common public radio interface (eCPRI)-based fronthaul interface, a message including a GSM packet corresponding to a timeslot in a frame of global system for mobile communications (GSM); and transmit the GSM packet to an upper node for the timeslot based on the message, wherein the message may include at least one of data corresponding to the GSM packet, information regarding a number of the frame, or information regarding a number of the timeslot.

In a related-art technology, a CPRI-based fronthaul interface may be used as a fronthaul interface for control information, user data, management information, synchronization information of GSM between a DU and an RU of a base station. However, embodiments of the disclosure may be used to support GSM even in an eCPRI-based fronthaul interface supporting LTE and NR.

Embodiments of the disclosure provide a GSM fronthaul interface for supporting a vDU and a multi-RAT RU. In the vDU, a multi-cell is supported with a few CPU cores, so that efficiency increases and flexibility is enhanced. The multi-RAT RU supports not only LTE, NR but also GSM with one RU, so that high efficiency is provided.

The eCPRI-based fronthaul interface according to various embodiments of the disclosure supports not only LTE and NR but also GSM. In addition, embodiments of the disclosure provide a function split for GSM by considering resources, capability of each of a DU and an RU. In addition, embodiments of the disclosure provide a message for CPRI-based GSM. In addition, embodiments of the disclosure provide a solution for generating an extended antenna carrier (eAxC) ID for CPRI-based GSM.

According to various embodiments of the disclosure, an antenna deployment may be simplified and efficiency may be enhanced thanks to the support of the multi-RAT RU. In addition, it is possible to operate a fronthaul interface flexibly through an appropriate option of a function split between the DU and the RU for GSM. In particular, when a GSM packet is transmitted, the eCPRI interface may transmit the packet with a fronthaul capacity of a small unit compared to the existing CPRI-based fronthaul interface, so that efficient message transmission is achieved. When a message is transmitted, it is also possible to adjust a timing on a timeslot basis.

In various embodiments of the disclosure, an eCPRI interface for a GSM communication system in addition to an LTE communication system and an NR communication system has been described. However, additionally supporting GSM in an interface supporting only an LTE communication system, or additionally supporting GSM in an interface supporting only an NR communication system may be understood as embodiments of the disclosure. That is, embodiments of the disclosure are not limited to interpretation that all of LTE and NR are implemented in a DU or RU supporting GSM.

Methods based on the claims or the embodiments disclosed in the disclosure may be implemented in hardware, software, or a combination of both.

When implemented in software, a computer readable storage medium for storing one or more programs (software modules) may be provided. The one or more programs stored in the computer readable storage medium are configured for execution performed by one or more processors in an electronic device. The one or more programs include instructions for allowing the electronic device to execute the methods based on the claims or the embodiments disclosed in the disclosure.

The program (the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. The program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may access via an external port to a device which performs the embodiments of the disclosure. In addition, an additional storage device on a communication network may access to a device which performs the embodiments of the disclosure.

In the above-described embodiments of the disclosure, elements included in the disclosure are expressed in singular or plural forms according to specific embodiments. However, singular or plural forms are appropriately selected according to suggested situations for convenience of explanation, and the disclosure is not limited to a single element or plural elements. An element which is expressed in a plural form may be configured in a singular form or an element which is expressed in a singular form may be configured in plural number.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A method performed by a distributed unit (DU) in a wireless communication system, the method comprising:
generating a frame of global system for mobile communications (GSM);
acquiring a GSM packet corresponding to a timeslot of the frame based on packetizing of the frame of the GSM; and
transmitting a message comprising the GSM packet to a radio unit (RU) through an enhanced common public radio interface (eCPRI)-based fronthaul interface,
wherein the message comprises at least one of data corresponding to the GSM packet, information regarding a number of the frame, or information regarding a number of the timeslot.

2. The method of claim 1, wherein the data comprises IQ sample data caused by modulation of the GSM packet, or a bitstream corresponding to the GSM packet.

3. The method of claim 1, wherein the GSM packet comprises control information corresponding to a control plane (C-plane), and user data corresponding to a user plane (U-plane).

4. The method of claim 1, wherein the DU is configured to perform modulation and demodulation functions, and the RU is configured to perform resampling of the GSM packet and an RF function.

5. The method of claim 1, wherein the message further comprises an extended antenna-carrier (eAxC) identifier (ID) corresponding to the GSM packet, the eAxC ID being assigned by the DU,
wherein the eAxC ID is 16 bits long, and
wherein the eAxC ID indicates a radio access technology indicator for indicating GSM, a carrier index, and an antenna index.

6. A method performed by a radio unit (RU) in a wireless communication system, the method comprising:
receiving, from a distributed unit (DU) through an enhanced common public radio interface (eCPRI)-based fronthaul interface, a message comprising a GSM packet corresponding to a timeslot in a frame of global system for mobile communications (GSM); and
transmitting the GSM packet to a terminal for the timeslot based on the message,
wherein the message comprises at least one of data corresponding to the GSM packet, information regarding a number of the frame, or information regarding a number of the timeslot.

7. The method of claim 6, wherein the data comprisesIQ sample data caused by modulation of the GSM packet, or a bitstream corresponding to the GSM packet.

8. The method of claim 6, wherein the GSM packet comprises control information corresponding to a control plane (C-plane), and user data corresponding to a user plane (U-plane).

9. The method of claim 6, wherein the DU is configured to perform modulation and demodulation functions, and the RU is configured to perform resampling of the GSM packet and an RF function.

10. The method of claim 6, wherein the message further comprises an extended antenna-carrier (eAxC) identifier (ID) corresponding to the GSM packet, the eAxC ID being assigned by the DU,
wherein the eAxC ID is 16 bits long, and
wherein the eAxC ID indicates a radio access technology indicator for indicating GSM, a carrier index, and an antenna index.

11. An apparatus of a distributed unit (DU) in a wireless communication system, the apparatus comprising:
at least one transceiver; and
at least one processor coupled with the at least one transceiver,
wherein the at least one processor is configured to:
generate a frame of global system for mobile communications (GSM);
acquire a GSM packet corresponding to a timeslot of the frame based on packetizing of the frame of the GSM; and
transmit a message comprising the GSM packet to a radio unit (RU) through an enhanced common public radio interface (eCPRI)-based fronthaul interface,
wherein the message comprises at least one of data corresponding to the GSM packet, information regarding a number of the frame, or information regarding a number of the timeslot.

12. The apparatus of claim 11, wherein the data comprisesIQ sample data caused by modulation of the GSM packet, or a bitstream corresponding to the GSM packet.

13. The apparatus of claim 11, wherein the GSM packet comprises control information corresponding to a control plane (C-plane), and user data corresponding to a user plane (U-plane).

14. The apparatus of claim 11, wherein the DU is configured to perform modulation and demodulation functions, and the RU is configured to perform resampling of the GSM packet and an RF function.

15. The apparatus of claim 11, wherein the message further comprises an extended antenna-carrier (eAxC) identifier (ID) corresponding to the GSM packet, the eAxC ID being assigned by the DU,
wherein the eAxC ID is 16 bits long, and
wherein the eAxC ID indicates a radio access technology indicator for indicating GSM, a carrier index, and an antenna index.
